# EUROPÄISCHE PATENTSCHRIFT

(11) **EP 3 757 651 B1**
(45) Veröffentlichungstag und Bekanntmachung des Hinweises auf die Patenterteilung: **20.09.2023**
(21) Anmeldenummer: 20176485.9
(22) Anmeldetag: 26.05.2020
(51) Int. Cl.: G02B 23/08, G02B 27/64, F41H 5/26

(54) **OPTISCHES GERÄT SOWIE VERFAHREN ZUR HOCHAUFLÖSENDEN BILDÜBERTRAGUNG**
OPTICAL APPARATUS AND METHOD FOR HIGH RESOLUTION IMAGE TRANSMISSION
APPAREIL OPTIQUE ET PROCÉDÉ DE TRANSMISSION D'IMAGE HAUTE RÉSOLUTION

(30) Priorität: 05.06.2019 DE 102019115146
(43) Veröffentlichungstag der Anmeldung: 30.12.2020
(73) Patentinhaber: SCHOTT AG, 55122 Mainz (DE)
(72) Erfinder: WEISER, Stefan, 61191 Rosbach (DE)
(74) Vertreter: Blumbach · Zinngrebe Patentanwälte PartG mbB

(56) Entgegenhaltungen:
- EP-A1- 0 170 317
- EP-A1- 1 467 237
- WO-A1-90/11549
- DE-A1- 2 740 456
- US-A- 2 039 878
- US-A- 5 721 585

## Beschreibung

Die vorliegende Erfindung betrifft ein optisches Gerät und ein Verfahren zur hochauflösenden Bildübertragung.

Die Punkt-zu-Punkt-Übertragung von Bildern, insbesondere die Übertragung eines aufgenommenen Bildes von einem Aufnahmeort zu einem beabstandet davon liegenden zweiten Ort, an dem eine Visualisierung des Bildes erfolgt, stellt für viele technische Bereiche eine wichtige Applikation dar.

So sind beispielsweise Endoskope bekannt, welche es ermöglichen, das Innere von Organismen zu untersuchen. Hierbei erfolgt vielfach die Bildübertragung mittels faseroptischer Bildleiter. Ein derartiges Endoskop ist beispielsweise in der Druckschrift DE 297 18 058 U1 genannt. Auch opto-elektronische Verfahren mittels beispielsweise einer Kamera sind bekannt.

Abhängig von den speziellen Anwendungsgebieten für die Punkt-zu-Punkt-Übertragung des Bildes treten vielfältige Anforderungen an die Geräte zur Bildübertragung hinzu, die diese auch unterscheiden von Geräten, welche allein zur Übertragung von optischen Signalen anstelle von Bildern ausgebildet sind. Derartige optische Geräte sind beispielsweise in der Druckschrift DE 10 2006 022 023 B4 oder DE 10 2008 001 653 A1 genannt.

Die Druckschrift US 2005/0036735 beschreibt eine Drehkupplung zur Signalübertragung zwischen zwei optischen Fasern.

Die Druckschriften US 4,027,945 und US 4,258,976 beschreiben weitere Vorrichtungen zur Signalübertragung zwischen einem rotierenden und einem feststehenden Element.

Im Gegensatz zur reinen Signalübertragung ist es im Bereich der Bildübertragung bekannt, Periskope einzusetzen, um aus einem geschützten Bereich oder Raum heraus die Umgebung oder in einen geschützten Raum hinein beobachten zu können. Bei derartigen optischen Geräten erfolgt die Beobachtung durch ein längliches Rohr, an dessen beiden Öffnungen Spiegel oder Prismen montiert sind, welche senkrecht zum Rohr verlaufende Lichtstrahlen in das Rohr und parallelversetzt zur ursprünglichen Einfallsrichtung wieder herausleiten.

So beschreibt etwa die US 5 721 585 A ein System, welches die Erfassung und Anzeige von Stand- und Echtzeit-Panoramabildern mit 360 Grad Azimut und ±180 Grad Deklination erlauben soll. Über einen Motor wird ein Stirnradgetriebe angetrieben, welches die Rotation des Bildaufnehmers ermöglicht.

Die EP 1 467 237 A1 beschreibt ein Periskop für ein gepanzertes Fahrzeug, welches auf einem drehbaren Turm montiert ist. Das Periskop auf dem Turm verfügt über eine eigene Drehachse.

Die WO 90/11549 A1 beschreibt eine Präsentationsvorrichtung zum gleichzeitigen Präsentieren eines Bildes in Auflicht oder Durchlicht, bspw. eines Diapositives. Das Bild wird auf eine Milchglasscheibe projiziert.

Die DE 27 40 456 A1 beschreibt eine Einrichtung zum Sehen aus geschlossenen Räumen. Es wird ein der Endoskopie vergleichbare optische Vorrichtung mit einer Glasfaser vorgeschlagen, um den Innenraum optisch mit der Außenwelt zu verbinden.

US 20 398 78 A beschreibt eine Teleskopvorrichtung mit einer Antriebseinheit für Beobachtungen eines astronomischen Fixpunktes.

EP 0 170 317 A1 beschreibt ein Periteleskop für gezielte astronomische Beobachtungen in azimutaler Richtung.

Derartige Periskope oder Winkelspiegel weisen allerdings einige Nachteile auf. So ist zum einen bauraumbedingt eine entsprechend große Öffnung in der den geschützten Bereich umgebenden schützenden Hülle, also beispielsweise in der Panzerung, vorzusehen, was für die Struktur als solche eine Schwächung bedeutet, aber auch für die Sicherheit der in dem geschützten Raum sich aufhaltenden Personen ungünstig sein kann.

Ein anderer Nachteil liegt darin, dass insbesondere bei Winkelspiegeln nur eine horizontal und/oder vertikal begrenzte Sicht möglich ist, so dass eine Rotationsüberwachung mit einem Umkreis von 360° nicht gegeben ist. Um dem abzuhelfen, können zwar mehrere in verschiedenen Winkeln zueinander angeordnete Winkelspiegel verwendet werden. Dies führt aber zu dem Erfordernis, noch mehr Öffnungen in der schützenden Hülle vorzusehen.

Zwar ist eine rein optische anschlaglose Rotationsüberwachung im Umkreis von 360° von einem festen Beobachtungsplatz aus möglich unter Nutzung eines optischen Tunnels mit entsprechenden Umlenkungen, beispielsweise mittels drehbarer Spiegel. Die dafür benötigte Applikation ist dann aber sehr groß und schwer. Zudem benötigen derartige Vorrichtungen viel Platz, was innerhalb eng begrenzter Räume wie etwa einem besonders geschützten Raum in einem Fahrzeug sehr unvorteilhaft ist. Auch hier kann ein entsprechend großer Durchbruch der schützenden Außenhülle erforderlich sein, was zu einer Schwächung führen kann.

Durch den Einsatz faseroptischer Bildleiter wird diese Möglichkeit zwar hinsichtlich des Risikos beim Durchbrechen der schützenden Außenhülle reduziert, da die Größe der erforderlichen Öffnung verringert werden kann.

Diese Bildleiter können starr, bspw. als Stab aus zumindest einem lichtleitenden Element, oder flexibel, bspw. als Bündel lichtleitender Fasern, ausgebildet sein.

Allerdings wird die Einsatzmöglichkeit derartiger faseroptischer Bildleiter dadurch eingeschränkt, dass es bei einer Rotationsbewegung zur Überwachung in einem Umkreis von 360°, insbesondere bei einer kontinuierlichen, anschlagslose Rundumüberwachung im Umkreis von mehr als 360°, d.h. mehrfachen vollständigen Rotationen um eine Achse in einer Drehrichtung, zu einer stetig stärkeren Torsion des faseroptischen Bildleiters kommt. Eine weitere Rotation nach Erreichen einer physikalisch maximalen Torsion des Bildleiters, also ein Weiterdrehen bzw. Überdrehen über dieses Maximum hinaus, führt dagegen rasch zu einer Beschädigung bzw. sogar Zerstörung der einzelnen Fasern des Bildleiters und macht ihn damit unbrauchbar.

Eine Übertragung von Bildern eines rotierenden Objektives, welches auch eine Rundumüberwachung im Umkreis von mehr als 360° ermöglicht, und welche das Bild auf eine fixe Okularposition übertragen kann, ist damit wünschenswert.

Zwar sind Kamerasysteme zur Videoübertragung von Bildern oder andere opto-elektronische Applikationen bekannt, die es ermöglichen, Bilder aus einem rotierenden Objektiv heraus auf ein Anzeigesystem zu übertragen. Allerdings sind, gerade bei besonders geschützten Räumen wie gepanzerten Fahrzeugen, auch Notsysteme erforderlich und gewünscht, welche etwa bei Ausfall der elektrischen Systeme, zum Beispiel infolge eines elektromagnetischen Pulses ("EMP"), eine rein optische anschlaglose Rundumüberwachung im Umkreis von 360° und mehr ermöglichen.

Wünschenswert wären daher ein allein auf optischer und/oder mechanischer Basis arbeitendes Gerät sowie ein Verfahren zur hochauflösenden Bildübertragung, welches die oben genannten Nachteile vermeidet.

Dabei soll das Gerät eine kontinuierliche, anschlaglose Rundumüberwachung in einem Umkreis von 360° und mehr ermöglichen.

Das Gerät soll es ferner auch bei Ausfall oder Nichtnutzbarkeit von elektrischen Systemen, beispielsweise bei Ausfall einer Kamera mit Videoüberwachung oder anderen opto-elektronischen Applikationen, ermöglichen, rein optisch und auf mechanischer Basis eine anschlaglose 360° Rundumbeobachtung außerhalb bzw. innerhalb eines besonders geschützten Raumes durchführen zu können.

Dabei soll eine stetige Bildübertragung aus einem beweglichen, insbesondere um zumindest eine Drehachse anschlaglos rotierbaren Objektiv auf eine gegenüber dem Objektiv feststehende Anzeige möglich sein. Eine anschlaglose Rotation meint dabei eine Rotation um zumindest eine Drehachse um mehr als 360°.

Dabei soll ferner der erforderliche Bauraum möglichst gering sein, so dass der erforderliche Platzbedarf gering ist und insbesondere auch Durchbrüche durch eine schützende Hülle möglichst klein gehalten werden können. Zudem soll auch das Gewicht des optischen Geräts möglichst niedrig sein.

Dieser Aufgabe haben sich die Erfinder angenommen. Überraschend einfach wird diese Aufgabe durch ein optisches Gerät und ein Verfahren zur Bildübertragung nach einem der unabhängigen Ansprüche 1 und 17 gelöst. Bevorzugte Ausführungsformen und Weiterbildungen der Erfindung sind den jeweiligen Unteransprüchen zu entnehmen.

Gegenstand der Erfindung ist nach Anspruch 1 ein optisches Gerät zur hochauflösenden Bildübertragung, durch eine schützende Hülle hindurch, insbesondere zur Außenbeobachtung oder als Inspektionsvorrichtung zur Innenbeobachtung.

Das optische Gerät gemäß Anspruch 1 umfasst:
- zumindest ein bildleitendes Element mit einem distalen und einem proximalen Ende,
- ein umkehrendes Reflexionsprisma mit einer Eintritts- und einer Austrittsfläche, und
- ein Anzeigeelement.

Das distale Ende des bildleitenden Elements gemäß Anspruch 1 umfasst dabei eine Lichteintrittsfläche, durch welche elektromagnetische Strahlung aus der Umgebung in Form von Lichtstrahlen in das bildleitende Element eintreten können. Die Lichteintrittsfläche ist vorzugsweise mit einem abbildenden optischen Element zum Erfassen von Lichtstrahlen, beispielsweise eines im Sichtbereich des abbildenden Elements liegenden Objektes, und zum Erzeugen eines Bildes gekoppelt. Ein Bild ist eine virtuelle optische Abbildung dieser Lichtstrahlen. Das abbildende optische Element ist dabei vorzugsweise ein Objektiv. Sofern nachfolgend von Lichtstrahlen gesprochen wird, also von einem Bündel elektromagnetischer Strahlen, so ist im Sinne der Erfindung hierunter zum einen der sichtbare Wellenlängenbereich elektromagnetischer Strahlen von etwa 380 nm bis 780 nm zu verstehen. Zum anderen ist erfindungsgemäß hierunter aber auch zumindest der sich beidseitig anschließende Wellenlängenbereich mit umfasst, welcher sich beispielsweise in den nahinfraroten Wellenlängenbereich zwischen 780 nm und 3.000 nm, in den infraroten Wellenlängenbereich oberhalb von 3.000 nm oder auch in den ultravioletten Wellenlängenbereich unterhalb von 380 nm erstreckt. So ist beispielsweise auch vorgesehen, in einer bevorzugten Ausführungsform mit dem erfindungsgemäßen optischen Gerät Wärmebilder in nahinfraroten Wellenlängenbereich zu übertragen.

Das bildleitende Element gemäß Anspruch 1 ist dazu ausgebildet, Lichtstrahlen bzw. elektromagnetische Strahlung von dem distalen Ende zu dem proximalen Ende zu leiten und von dort auf eine Eintrittsfläche des umkehrenden Reflexionsprismas auszukoppeln, welches demnach im Strahlengang nachgeschaltet ist. Das proximale Ende des bildleitenden Elements kann dazu ein weiteres optisches Element zur Auskopplung der erfassten und mittels des bildleitenden Elements übertragenen Lichtstrahlen umfassen, beispielsweise eine Linse. Vorzugsweise handelt es sich dabei um eine fokussierende Linse, welche dazu ausgebildet ist, das Bild auf die Eintrittsfläche des umkehrenden Reflexionsprismas zu projizieren. Demzufolge sind das bildleitende Element und das umkehrende Reflexionsprisma derart zueinander angeordnet, dass Lichtstrahlen nach Durchdringen des bildleitenden Elements auf das umkehrende Reflexionsprisma gerichtet werden können. Die optische Achse des bildleitenden Elements im Bereich des proximalen Endes und die optische Achse des umkehrenden Reflexionsprismas sind daher vorzugsweise parallel bzw. kollinear zueinander angeordnet.

Ein umkehrendes Reflexionsprisma, auch als Umkehr- oder Wendeprisma bekannt, verfügt typischerweise über zwei im gleichen Winkel gegenüber einer Basisfläche geneigte Flächen, durch welche elektromagnetische Strahlen ein- und austreten können. Bei Durchtritt eines Strahlenbündels im Betrieb des optischen Gerätes durch diese Eintritts- oder Austrittsfläche wird das Licht gebrochen, und es erfolgt eine Bildumkehr. Für die Erfindung geeignet sind allgemein optische Elemente mit einer Eintritts- und einer Austrittsfläche, durch die ein Strahlenbündel hindurchtreten kann, und welche eine Bildumkehr durch eine Achsenspiegelung bewirken. Dies können Prismen sein. Ein für die Erfindung besonders geeignetes umkehrendes Reflexionsprisma ist ein sogenanntes Dove-Prisma.

Bei Durchtritt der Eintritts- und Austrittsfläche eines Dove-Prismas werden Lichtstrahlen, welche parallel zu seiner Basisfläche verlaufen, zweimal gebrochen mit der Wirkung einer einzigen Spiegelung. Bei einer Drehung eines derartigen Reflexionsprismas um eine Drehachse, die vorzugsweise identisch ist mit der optischen Achse und welche demzufolge parallel zu der Basisfläche des umkehrenden Reflexionsprismas angeordnet ist, wird ein hindurchtretendes Strahlenbündel ebenfalls um diese Achse gedreht, wobei die Drehung des Strahlenbündels doppelt so schnell erfolgt wie die Drehung des umkehrenden Reflexionsprismas. Bei einer Rotation des bildleitenden Elements mit einer Winkelgeschwindigkeit ω um die Drehachse erfolgt demnach eine Rotation des Strahlenbündels um dieselbe Drehachse mit einer Drehgeschwindigkeit 2 * ω. Wenn das Dove-Prisma, vorzugsweise durch ein spezielles Getriebe, dabei mit der halben Geschwindigkeit gedreht wird wie der bewegliche Teil des bildleitenden Elements, kann auf besonders günstige Weise eine kontinuierliche Abbildung der vorzugsweise kollimierten Lichtstrahlen von den Eingangs- auf die Ausgangsfläche realisiert werden.

Von daher ist das Dove-Prisma in einer besonders bevorzugten Ausführungsform derart gehaltert, dass es ebenfalls relativ zum Anzeigeelement rotierbar ist. Dabei ist vorgesehen, dass bei einer Rotation des proximalen Endes des bildleitenden Elements relativ zu dem Anzeigeelement das umkehrende Reflexionsprismas um dieselbe Drehachse, aber mit halber Drehgeschwindigkeit rotiert. Nach Durchtritt der Lichtstrahlen durch das umkehrende Reflexionsprisma und einer entsprechenden Achsspiegelung werden die Lichtstrahlen gemäß Anspruch 1 über die Austrittsfläche des Reflexionsprismas auf das Anzeigeelement gerichtet, welches demnach im Strahlengang nach dem Reflexionsprisma angeordnet ist.

Dabei ist gemäß Anspruch 1 vorgesehen, dass das bildleitende Element anschlaglos um mehr als 360° um eine Drehachse parallel zur optischen Achse des umkehrenden Reflexionsprismas relativ zu dem umkehrenden Reflexionsprisma und/oder zu dem Anzeigeelement rotierbar angeordnet und gelagert ist. Damit können im Betrieb das distale Ende des bildleitenden Elements und damit auch der Sichtbereich des abbildenden optischen Elements relativ zu dem Anzeigeelement um diese Drehachse geschwenkt werden. Baulich können dazu das umkehrende Reflexionsprisma und das Anzeigeelement beispielsweise in einem umgebenden Gehäuse untergebracht sein, wobei gemäß Anspruch 1 das proximale Ende des bildleitenden Elements rotierbar gehaltert ist. Die optische Achse des umkehrenden Reflexionsprismas bildet dabei vorzugsweise diese Drehachse, um welche das proximale Ende des bildleitenden Elements rotierbar gelagert ist. Dies ermöglicht es, dass die Lichtstrahlen nach Austritt aus dem bildleitenden Element das umkehrende Reflexionsprisma durchdringen und in das Anzeigeelement eingekoppelt werden können, wobei Strahlungsverlusten möglichst vermieden werden.

In überraschend einfacher Weise ermöglicht das erfindungsgemäße optische Gerät zur hochauflösenden Bildübertragung im Betrieb damit eine anschlaglose Rundumbeobachtung beziehungsweise eine Rundumüberwachung bei einer entsprechenden Rotation des bildleitenden Elements durch Schwenken der Lichteintrittsfläche des bildleitenden Elements, vorzugsweise in einer Rotationsbewegung um die Drehachse, um 360° und darüber hinaus. Hierbei ist das Anzeigeelement vorzugsweise gegenüber dem rotierenden bildleitenden Element fest. Sofern nachfolgend von einer anschlaglose Rundumbeobachtung gesprochen wird, so ist hierunter eine Beobachtung eines Raumes oder Bereiches in einem vorbestimmten Sichtfeld zu verstehen, wobei dieses Sichtfeld vertikal und/oder horizontal durch die Lichteintrittsfläche beziehungsweise das abbildende optische Element oder die numerische Apertur des bildleitenden Elements begrenzt sein kann. Anschlaglos meint in diesem Zusammenhang, dass die Lichteintrittsfläche des bildleitenden Elements um die Drehachse um mehr als 360° rotierbar ist.

Um den umgebenden Raum vollständig mit einer Umdrehung beobachten zu können, ist zumindest eine Umlenkung der Lichtstrahlen erforderlich. Von daher stehen die Oberflächennormale der Lichteintrittsfläche des bildleitenden Elements und die Oberflächennormale der Lichtaustrittsfläche des bildleitenden Elements vorzugsweise in einem Winkel µ zueinander. In einer bevorzugten Ausführungsform kann das bildleitende Element daher beispielsweise gebogen oder abgewinkelt ausgeführt sein. Die Oberflächennormale der Lichtaustrittsfläche des bildleitenden Elements liegt dabei vorzugsweise parallel zu der optischen Achse des umkehrenden Reflexionsprismas. In einer bevorzugten Ausführungsform sind diese Lichtaustrittsfläche und das umkehrende Reflexionsprisma kollinear zueinander angeordnet, um die Lichtstrahlen aus dem bildleitenden Element optimal auf die Eintrittsfläche des umkehrenden Reflexionsprismas einkoppeln zu können.

Die Oberflächennormale der Lichteintrittsfläche des bildleitenden Elements und die Oberflächennormale der Lichtaustrittsfläche stehen somit vorzugsweise in einem Winkel µ zueinander, welcher zwischen 5° und 175°, bevorzugt zwischen 20° und 160° und besonders bevorzugt zwischen 30° und 150° liegen kann.

In einer ganz besonders bevorzugten Ausführungsform beträgt dieser Winkel zwischen 85° und 95° und besonders bevorzugt etwa oder genau 90°, d.h., der abbildbare Sichtbereich befindet sich in einem vollständigen Umkreis im nahezu rechten Winkel zur optischen Achse des umkehrenden Reflexionsprismas, so dass die Blickrichtung um diesen Winkel umgelenkt wird.

Das bildleitende Element ist demzufolge gemäß einer bevorzugten Ausführungsform mit zumindest einer Biegung oder abgewinkelt ausgebildet, um diese Umlenkung der Blickrichtung zu ermöglichen. Um eine möglichst kompakte, kleine Bauform zu erreichen, wird im Fall einer gebogenen Ausführung vorzugsweise ein kleiner Biegeradius vorgesehen, welcher in einer bevorzugten Ausführungsform weniger als 50 mm, bevorzugt weniger als 30 mm und besonders bevorzugt weniger als 20 mm betragen kann. Für eine abgewinkelte Ausführungsform kann beispielsweise auch ein Winkelspiegel oder ein Umlenkprisma verwendet werden, um die Lichtstrahlen durch Reflexion entsprechend umzulenken.

In vorteilhafter Weiterbildung der Erfindung ist der Winkel µ variabel einstellbar oder variierbar einstellbar. Damit kann das optische Gerät an unterschiedliche Einbausituationen, etwa an unterschiedliche Fahrzeuge oder auch an unterschiedliche Montagepositionen, sehr einfach angepasst werden. Auf diese Weise kann der Sichtbereich in einer Ausrichtung festgelegt und damit auch sehr einfach an beispielsweise unterschiedliche Einsatzsituationen angepasst werden. In einer ganz besonders bevorzugten Weiterbildung der Erfindung ist der Winkel µ auch während einer Rotationsbewegung, also im Betrieb des optischen Gerätes, variabel einstellbar oder variierbar einstellbar, so dass ein Bediener des optischen Gerätes im Betrieb den Sichtbereich des optischen Gerätes in einer neben der Rotation weiteren Dimension zusätzlichen verändern kann. In einer vorteilhaften Weiterbildung der Erfindung ist demnach vorgesehen sein, dass die Lichteintrittsfläche des bildleitenden Elements gegenüber der Lichtaustrittsfläche beweglich gelagert ist, bevorzugt auch im Betrieb des optischen Gerätes, besonders bevorzugt auch während einer Rotationsbewegung des bildleitenden Elements.

Die Rotation, also die Drehbewegung des bildleitenden Elements gegenüber dem Anzeigeelement, erfolgt gemäß Anspruch 1 dabei stromlos also rein mechanisch, was insbesondere bei einem Ausfall elektrischer Systeme, etwa infolge eines Stromausfalls, von großem Vorteil ist. Die anschlaglose Rundumbeobachtung mit einer Rotation des bildleitenden Elements von mehr als 360° ermöglicht damit überraschend einfach eine kontinuierliche Visualisierung eines über die Lichteintrittsfläche des bildleitenden Elements aufgenommenen Bildes auf dem Anzeigeelement und ermöglichst damit eine Rundumüberwachung eines Raumes oder Bereiches, vorzugsweise auf der einen Seite der schützenden Hülle, von einem hiervon beabstandet angeordneten, vorzugsweise feststehenden Ort auf der anderen Seite der schützenden Hülle aus.

Das erfindungsgemäße optische Gerät bietet damit den großen Vorteil, unabhängig von der Verfügbarkeit von Strom auf rein optischer Basis, also mit passiven optischen Komponenten, eine anschlaglose Rundumbeobachtung außerhalb und/oder innerhalb eines besonders geschützten Raumes durchführen zu können.

Ein geschützter Raum meint in diesem Zusammenhang einen Raum, welcher gegenüber seiner Umgebung durch eine schützende Hülle geschützt oder abgeschirmt ist.

Unter einem geschützten Raum werden demnach, andere Ausführungsformen nicht ausschließend, zum Beispiel ein stationärer oder beweglicher Raum und/oder räumliche Strukturen,
die gegebenenfalls mit weiteren funktionalen Strukturen, Elementen oder Anbauten versehen sind oder versehen werden können, und gegebenenfalls mit diesen in Wirkzusammenhang stehen,
insbesondere im Wesentlichen fensterlos oder im Wesentlichen ohne bzw. mit eingeschränkter Ein- oder Ausblickmöglichkeit,
insbesondere zumindest teil- oder abschnittsweise verstärkte oder gepanzerte Räume, d.h. beispielsweise mit einer schützenden Hülle versehen,
wie beispielsweise Türme, Reaktoren und/oder Fahrzeuge, insbesondere gepanzerte Fahrzeuge, die bemannt oder unbemannt, fernbedient oder fernbedienbar, oder zumindest teilweise autonom sein können, verstanden.

Ein geschützte Raum kann also einen beweglichen geschützten Raum, etwa in oder an einem Fahrzeug, einem Flugzeug oder Schiff, oder auch einen stationären geschützten Raum, etwa einen Beobachtungsposten, umfassen. Eine schützende Hülle kann dazu dienen, einem Bereich oder einem Raum einen besonderen Schutz gegenüber von der Umgebung einwirkenden Einflüssen oder Kräften zu verleihen, oder aber auch, um einer Umgebung Schutz vor Einflüssen oder Kräften aus diesem Raum heraus zu verleihen. Die den einwirkenden Kräften zugewandte Seite der schützenden Hülle wird daher nachfolgend auch als exponierte Seite bezeichnet, die gegenüberliegend angeordnete Seite auch als nichtexponierte Seite, also die ungefährliche Seite.

Zum Schutz kann beispielsweise ein die schützende Hülle bildendes Material oder ein Materialverbund bzw. ein Schichtsystem ausgewählt sein, bei welchem durch die Auswahl des Materials einerseits, sowie seine Dicke und Anordnung andererseits eine hohe Festigkeit erreicht wird. Der Schutz wird also dadurch erreicht, dass das Material, beispielsweise eine Panzerung, der zu erwartenden Kraft, etwa durch Einwirken eines Projektils, oder einem anderen Einflussfaktor, etwa großer Hitze, standhält. Insofern stellt jede Öffnung in dieser schützenden Hülle eine Schwächung der Festigkeit und der Stabilität dieser Hülle dar, und ist damit als potentielles Risiko für den Ausfall der Schutzfunktion zu betrachten.

Als Material für die schützende Hülle kommen beispielsweise Metalle, keramische Werkstoffe oder Kevlar oder eine Kombination daraus in Betracht. Typischerweise kann durch derartige schützende Hüllen oder Panzerungen nicht oder eingeschränkt hindurchgesehen werden, so dass eine entsprechend durch die schützende Hülle geschützte Person keine Möglichkeit hat, das Geschehen auf der anderen Seite der schützenden Hülle zu beobachten.

Im Sinne der Erfindung ist daher vorgesehen, dass das optische Gerät, vorzugsweise das bildleitende Element und/oder das Anzeigeelement zumindest einen Abschnitt umfasst, in welchem die Querschnittsfläche möglichst gering dimensioniert ist. Bei dem bildleitenden Element liegt dieser Abschnitt vorzugsweise zwischen dem distalen und dem proximalen Ende.

Dies bietet den großen Vorteil, diesen Abschnitt des bildleitenden Elements oder des Anzeigeelements auch durch eine schützende Hülle führen zu können, ohne dass die hierzu erforderliche Öffnung groß dimensioniert werden muss, was zu einer Schwächung dieser schützenden Hülle führen könnte.

Das bildleitende Element und/oder das Anzeigeelement umfasst daher in einer sehr vorteilhaften Ausbildung zumindest einen Abschnitt vorzugsweise geringeren Querschnitts, in welchem die Querschnittsfläche reduziert ist, um die erforderliche Öffnung in der schützenden Hülle möglichst klein halten zu können. Vorzugsweise beträgt die Querschnittsfläche weniger als 500 mm², bevorzugt weniger als 400 mm² und besonders bevorzugt weniger als 300 mm² beträgt. In einer ganz besonders bevorzugten Ausführung beträgt die Querschnittsfläche weniger als 200 mm² und sogar weniger als 150 mm², weniger als 100 mm² oder weniger als 50 mm². Dies ermöglicht es, die in der schützenden Hülle einzubringende Öffnung auf eine dementsprechend geringe Dimension zu bringen. Eine derartige Minimalisierung der erforderlichen Öffnung bedeutet eine enorme Risikominimierung für die Hülle. Sofern von einem Abschnitt geringeren Querschnitts gesprochen wird, so schließt dies selbstverständlich nicht aus, dass das bildleitende Element oder das Anzeigeelement über die gesamte Länge einen derartigen geringen Querschnitt aufweisen.

Da eine derartige schützende Hülle im Allgemeinen eine gewisse Dicke aufweist, ist es weiterhin sehr vorteilhaft, wenn dieser Abschnitt geringeren Querschnitts des bildleitenden Elements oder des Anzeigeelements mit der geringen Querschnittsfläche eine gewisse Länge aufweist, womit eine Ausdehnung in Längsrichtung gemeint ist, um auch durch dickere Materialien bzw. Materialverbünde, wie sie bei einer Panzerung auftreten können, geführt werden zu können.

Daher ist es sehr vorteilhaft, wenn die Länge dieses Abschnitts des bildleitenden Elements auf die Länge bzw. die Dicke der zu durchquerenden schützenden Hülle an der vorgesehenen Stelle abgestimmt ist. Die Länge kann daher vorzugsweise wenigstens 5 mm, bevorzugt wenigstens 10 mm und besonders bevorzugt wenigstens 20 mm, 100 mm oder sogar 200 mm betragen. Um durch eine Öffnung in einer schützenden Hülle geführt werden zu können, bietet es sich weiterhin an, die Querschnittsfläche entlang dieses Abschnittes in ihren äußeren Abmessungen konstant zu halten. Dies ermöglicht es, das optische Gerät auch bei oder mit entsprechend dickerer Panzerung bis hin zu 200 mm Dicke oder auch darüber hinaus verwenden zu können.

Das erfindungsgemäße optische Gerät bietet damit den großen Vorteil, an oder in Verbindung mit einer schützenden Hülle verwendet werden zu können, wobei ein Bediener oder Nutzer des optischen Geräts dann auf der nicht-exponierten, geschützten Seite der schützenden Hülle über das feststehende Anzeigeelement eine Rundumbeobachtung auf der gegenüberliegenden, exponierten Seite der schützenden Hülle durchführen kann. Auf diese Weise ist der Bediener vor möglichen Gefahren oder einwirkenden mechanischen Kräften durch die schützende Hülle geschützt und kann dennoch den gegenüberliegenden Raum oder Bereich umfassend auf rein optischer Basis beobachten. Von daher ist vorgesehen, zumindest das Anzeigeelement, günstigerweise aber auch das umkehrende Reflexionsprisma als wesentliche Komponenten des optischen Gerätes auf der geschützten Seite der schützenden Hülle anzuordnen.

Zur Befestigung an oder mit der schützenden Hülle können das Anzeigeelement und/oder das umkehrende Reflexionsprisma fest mit der schützenden Hülle verbunden sein oder verbunden werden.

Das bildleitende Element und/oder das Anzeigeelement können zumindest abschnittsweise starr oder flexibel ausgebildet sein. In anderen Worten, das bildleitende Element kann als Ganzes starr oder flexibel ausgebildet sein, oder auch eine Kombination eines starr ausgebildeten Abschnittes mit einem flexibel ausgebildeten Abschnitt umfassen.

Eine starre Ausführung ermöglicht es, das bildleitende Element und/oder das Anzeigeelement mit einer gewissen eigenen Stabilität auszustatten, so dass beispielsweise auf zusätzliche Bauelemente oder Gehäuse zum Haltern zumindest teilweise verzichtet werden kann. Eine flexible Ausführung oder zumindest abschnittsweise flexible Ausführung ermöglicht es dagegen, eine demensprechend variable und vielseitige Führung des bildleitenden Elements und/oder des Anzeigeelements. Eine zumindest abschnittsweise flexible Ausführung ermöglicht es besonders einfach, den Winkel µ entsprechend variabel einzustellen oder auch im Betrieb zu ändern, um den Sichtbereich zu verändern.

Es kann aber auch der gebogene oder abgewinkelte Abschnitt des bildleitenden Elements und/oder das Anzeigeelement starr ausgeführt sein, um eine gewisse Eigenstabilität in diesem Bereich zur Verfügung zu stellen. Im Fall des bildleitenden Elements etwa kann sich in Richtung distales Ende ein flexibler Bereich anschließen, welcher eine besonders flexible Verlegung des bildleitenden Elements ermöglicht.

In einer besonders bevorzugten Ausführungsform umfasst das bildleitende Element und/oder das Anzeigeelement zumindest einen hochauflösenden faseroptischen Bildleiter zur Bildübertragung. Der hochauflösende faseroptische Bildleiter kann dabei sowohl flexibel als auch starr ausgebildet sein.

Der hochauflösende faseroptische Bildleiter ermöglicht es, im Betrieb des optischen Gerätes Lichtstrahlen von der Lichtaustrittsfläche des umkehrenden Reflexionsprismas aufzunehmen und zu einem hiervon beabstandet angeordneten Ort zu transportieren, an dem eine Visualisierung für einen Bediener, etwa über ein Okular, erfolgen kann.

Faseroptische Bildleiter zeichnen sich durch eine Vielzahl von Lichtleitern bzw. lichtleitenden Fasern aus, welche eingangs- und ausgangsseitig in gleicher Ordnung vorliegen und wobei jede Faser jeweils eine Helligkeits- und eine Farbinformation übertragen kann. Das Licht kann dabei durch Reflexion am Übergang zwischen Mantel und Kern innerhalb einer Lichtleitfaser übertragen werden. Zur Vermeidung von Lichtübertritt zwischen benachbarten Lichtleitfasern sind diese günstigerweise entsprechend geschützt. Die Anzahl und die Größe der Lichtleitfasern bestimmt die optische Auflösung des Bildes und damit die Qualität der Bildübertragung des optischen Geräts.

Ein hochauflösender faseroptischer Bildleiter vermag es in hervorragender Weise, den Anforderungen nach einer geringen Querschnittsfläche einerseits und gleichzeitig hoher Auflösung andererseits zu entsprechen. Der Durchmesser einer Lichtleitfaser bestimmt dabei die Auflösung des übertragenen Bildes, wobei kleinere Durchmesser eine höhere Auflösung ermöglichen können.

Vorzugsweise werden für die Erfindung hochauflösende faseroptische Bildleiter mit einem kleinen Durchmesser der einzelnen Lichtleitfaser ausgewählt, vorzugsweise mit einem Durchmesser der Lichtleitfaser von 12 µm oder weniger, bevorzugt 10 µm oder weniger, besonders bevorzugt 7 µm oder weniger.

Diese einzelnen Lichtleitfasern können zu einem starren Lichtleitelement beziehungsweise einem starren Bildleiter, oder zu einem flexiblen Bündel, umfassend eine Vielzahl derartiger Lichtleitfasern, zusammengeführt werden. Ein derartiges Lichtleitelement oder Bündel kann von Vorteil wenigstens 1.000, bevorzugt wenigstens 5.000, besonders bevorzugt wenigstens 10.000 Lichtleitfasern umfassen. Für einen hochauflösenden faseroptischen Bildleiter ("wound fiber bundle") können dann wiederum eine Vielzahl derartiger Bündel zusammengeführt werden, so dass ein für die Erfindung sehr gut geeigneter hochauflösender faseroptischer Bildleiter dann eine Vielzahl von wenigstens 10.000 Lichtleitfasern umfasst, bevorzugt wenigstens 100.000, und besonders bevorzugt wenigstens 200.000 Lichtleitfasern oder sogar noch darüber hinaus.

Ein erfindungsgemäß geeigneter faseroptischer Bildleiter mit beispielsweise 160.000 Lichtleitfasern mit einem Durchmesser der einzelnen Lichtleitfaser von beispielsweise 10 µm kann somit eine Auflösung in einem Bereich von etwa 45 LP/mm (Linienpaare/mm) zur Verfügung stellen, wobei eine Auflösung von wenigstens 25 LP/mm, bevorzugt wenigstens 30 LP/mm, besonders bevorzugt wenigstens 40 LP/mm bereits für eine erfindungsgemäße Verwendung ausreichen kann. Ein derartiger hochauflösender faseroptischer Bildleiter ist für das optische Gerät besonders gut geeignet und bietet hervorragende Sichtmöglichkeiten, auch im Fernbereich von 500 m und mehr.

Die Querschnittsfläche des faseroptischen Bildleiters zumindest in dem Abschnitt geringeren Querschnitts bestimmt die Größe der erforderlichen Öffnung, welche in der schützenden Hülle vorzusehen ist, um das bildleitende Element hindurchführen zu können, wobei weiterhin eine mögliche Ummantelung des faseroptischen Bildleiters zu berücksichtigen ist. Sehr kleine Querschnitte von für eine Bildübertragung geeigneten flexiblen faseroptischen Bildleitern können in einem Bereich ab etwa 2*2 mm² = 4 mm² oder ab einem Durchmesser von 1 mm liegen und ermöglichen bereits eine gute Beobachtung bei Tag im Nahbereich des optischen Geräts. Damit ist es möglich, die Öffnung in der schützenden Hülle auf eine Querschnittsfläche in etwa dieser Größenordnung zu reduzieren. Die Schwächung der Struktur der schützenden Hülle kann bei einer derart kleinen Öffnung als minimal angesehen werden.

Selbstverständlich sind auch größere Querschnittsflächen möglich, welche es beispielsweise erlauben, eine entsprechende Ummantelung vorzusehen, wobei aber eine Größe der Querschnittsfläche von etwa 40*35 mm² = 1.400 mm² nicht überschritten werden sollte, um die Öffnung in der schützenden Hülle möglichst klein halten zu können. Die tolerierbare Größe der Öffnung hängt selbstverständlich auch von der Art und dem Material der schützenden Hülle selbst ab, so dass die Auswahl eines geeigneten bildleitenden Elements sich einerseits hiernach sowie andererseits nach den optischen Anforderungen richten kann, so dass auch größere Querschnittsflächen denkbar sind.

Im Gegensatz zu den flexiblen faseroptischen Bildleitern ermöglich starre faseroptische Bildleiter ("clad rod"), Lichtleitfasern mit kleinerem Durchmesser einzusetzen, etwa im Bereich von 4 µm, was dann auch zu guten Nachtsichtmöglichkeiten des optischen Gerätes führen kann.

Grundsätzlich können die faseroptischen Bildleiter bezüglich ihrer Außengeometrie, der Anzahl und der Größe der einzelnen Lichtleitfasern in vielfältiger Hinsicht nach den vorgegebenen Anforderungen konfiguriert und ausgewählt werden.

Von Vorteil verfügt das bildleitende Element und/oder das erfindungsgemäße optische Gerät über eine große Temperaturbeständigkeit und genügt in einer bevorzugten Ausführungsform den einschlägigen Normen, so etwa der MIL-STD-810H (2019), so dass auch eine Verwendung im Geltungsbereich der Norm möglich ist. Die Temperaturbeständigkeit des optischen Gerätes liegt demnach vorzugsweise in einem Bereich von wenigstens -20 °C bis zu +100 °C, mehr bevorzugt von -55 °C bis +125 °C, um auch bei extremen Bedingungen eingesetzt werden zu können. Viele faseroptische Bildleiter genügen diesen Anforderungen.

Die Auswahl des abbildenden optischen Elements ist dabei bezüglich seiner Auflösungsleistung von Vorteil auf die Auflösung und Konfiguration des optischen Geräts abgestimmt. So sind beispielsweise sogenannte C-Mount-Objektive bekannt, also Objektive, welche über einen Anschluss nach dem C-Mount-Standard verfügen, mit einer Auflösung von mehr als 75 LP/mm oder sogar mehr als 150 LP/mm, und können daher sehr gut mit den vorstehend genannten faseroptischen Bildleitern zusammen verwendet werden. Selbstverständlich sind auch andere Objektive möglich und einsetzbar, beispielsweise gängige Industrie-Objektive oder sonstige, für besondere Anwendungen entwickelte Objektive.

Hochauflösende faseroptische Bildleiter sind besonders gut geeignet zur Bildübertragung für das erfindungsgemäße optische Gerät, da sie mit sehr geringer Querschnittsfläche ausgebildet werden können und damit der Anforderung an eine Minimierung der Öffnung in der schützenden Hülle in hervorragender Weise entsprechen.

Zudem sind faseroptische Bildleiter auch mit einer Länge von mehr als 1 m, etwa 2 m oder sogar mehr möglich und erhältlich, beispielsweise flexible faseroptische Bildleiter mit einer Länge bis zu etwa 5 m, wie sie als sogenannte "wound fiber bundles" von der Fa. Schott AG, Mainz, erhältlich sind. Eine Ausführung als hochauflösender flexibler faseroptischer Bildleiter bietet den großen Vorteil, die Bildübertragung sehr flexibel gestalten zu können und das bildleitende Element und/oder das Anzeigeelement geometrisch sehr gut an die räumlichen Begebenheiten anpassen zu können.

Ein flexibler faseroptischer Bildleiter für das bildleitende Element kann beispielsweise von dem optischen Gerät aus durch die schützende Hülle in einen Turm und/oder zu einem Zielsystem verlegt werden, und dann gemeinsam mit dem Turm oder dem Zielsystem bewegt werden. Hierzu ist es sehr vorteilhaft, wenn das bildleitende Element den vorstehend genannten flexiblen faseroptischen Bildleiter umfasst, vorzugsweise dann mit entsprechender Länge von beispielsweise 3 m oder 4 m oder darüber hinaus.

Dies ermöglicht eine Verwendung für oder in Verbindung mit modernen aktiven oder passiven, beziehungsweise auch defensiven oder offensiven, Beobachtungs- oder Operationssystemen, beispielsweise für einen sogenannten "Watchtower Container", also einem stationär positionierten, geschützten Bedienerraum einer, gegebenenfalls fernbedienten oder fernbedienbaren, Beobachtungs- oder Operationsstation ("Remote Station"). Derartige fernbediente oder fernbedienbare oder zumindest teilweise autonomen Beobachtungs- oder Operationsstationen sind selbstverständlich auch in Verbindung mit beweglichen Fahrzeugen möglich und realisierbar. Solche Systeme verfügen dabei häufig über eine sich endlos drehende oder drehbare Plattform, wobei das erfindungsgemäße optische Gerät es ermöglicht, bei Ausfall der Primärsysteme auf passivem Wege die Außensicht und die Operationsfähigkeit aufrechtzuerhalten.

Eine starre Ausführung bietet dagegen den Vorteil, dass keine aufwendigen weiteren Stützkonstruktionen für das bildleitende Element erforderlich werden. So kann das bildleitende Element sehr klein und leicht ausgebildet sein.

In einer Weiterbildung der Erfindung kann der faseroptische Bildleiter weitere besondere Lichtleitfasern umfassen, beispielsweise sogenannte IR-Fasern. IR-Fasern im Sinne der Erfindung sind dazu ausgebildet, elektromagnetische Strahlung im nahinfraroten oder infraroten Bereich zu übertragen. Dies ermöglicht es, dass das optische Gerät auch sehr gut im Bereich der Wärmebildübertragung verwendet werden kann.

In einer bevorzugten Ausführungsform kann der faseroptische Bildleiter daher auch ausschließlich oder ergänzend IR-Fasern umfassen zur Übertragung elektromagnetischer Strahlen im nahen Infrarotbereich zwischen 780 nm bis 3.000 nm und/oder im infraroten Bereich oberhalb von 3.000 nm. Für derartige Ausführungsformen ist auch das Anzeigeelement vorzugsweise ausgewählt bzw. ausgebildet für eine Übertragung und/oder Visualisierung von Wärmebildstrahlung, also um Wärmebilder wiedergeben zu können.

Für eine gute Darstellung von Bildern, insbesondere auch von Wärmebildern, ist es hilfreich, wenn die Dämpfung des optischen Systems möglichst gering ist, also die Transmission für elektromagnetische Strahlung in den relevanten Wellenlängenbereichen möglichst hoch. Vorzugsweise beträgt daher die maximale Dämpfung des bildleitenden Elements und/oder des Anzeigeelements im sichtbaren Wellenlängenbereich elektromagnetischer Strahlen zwischen 380 nm bis 780 nm höchstens 5 db/m, bevorzugt höchstens 3 db/m, meist bevorzugt höchstens 1db/m. Sofern IR-Fasern verwendet werden, beträgt die maximale Dämpfung im nahen Infrarotbereich zwischen 780 nm bis 940 nm ebenfalls bevorzugt höchstens 5 db/m, bevorzugt höchstens 3 db/m, meist bevorzugt höchstens 1db/m.

Vorzugsweise gilt dies auch für den Wellenlängenbereich bis 3.000 nm und darüber hinaus, und/oder für den ultravioletten Wellenlängenbereich unterhalb von 380 nm.

In einer vorteilhaften Ausgestaltung kann so erreicht werden, dass beispielsweise der Dynamikbereich oder die thermische Empfindlichkeit, also u.a. die kleinste erfassbare Temperaturdifferenz bei gegebener Umgebungstemperatur, eines dem Anzeigeelement nachgeschalteten thermischen Sensors oder einer Wärmebildkamera, weitgehend nutzbar bleibt. Charakteristische Größen hierfür sind üblicherweise die "Minimum resolvable temperature difference (MRTD)" oder Noise Equivalent Temperature Difference (NETD)".

In einer ebenfalls bevorzugten Ausführungsform umfasst das bildleitende Element ergänzend oder zusätzlich optisch wirksame Markierungselemente, welche es einem Bediener ermöglichen, den konkreten Drehwinkel des abbildenden optischen Elements oder das Inkrement einer Drehung zu erkennen oder abzulesen. Dies können, insbesondere bei Verwendung eines hochauflösenden faseroptischen Bildleiters, bestimmte Lichtleitfasern sein, die eine Markierung darstellen können. Derartige Markierungselemente können passive und/oder aktive Markierungselemente umfassen.

Passive Markierungselemente können beispielsweise Hohlstellen innerhalb des Faserbündels des Bildleiters oder markierte Lichtleitfasern umfassen, beispielsweise andersfarbige Lichtleitfasern, etwa schwarz eingefärbte Lichtleitfasern.

Aktive Markierungselemente können beispielsweise markierbare Lichtleitfasern umfassen, etwa beleuchtbare und im Betrieb dauerbeleuchtete Fasern in dem Faserbündel des Bildleiters.

Im Querschnitt des bildleitenden Elements können diese Markierungselemente beispielsweise am äußeren Rand in regelmäßigen Abständen zueinander angeordnet sein. Für die Erfindung geeignete hochauflösende faseroptische Bildleiter können über einen kreisförmigen Querschnitt verfügen. In diesem Fall kann sich beispielsweise eine Teilung analog zu einem Ziffernblatt oder einer Kompassrose anbieten. Die einzelnen Kreissegmente können dann beispielsweise jeweils mit gleichen Markierungselementen oder auch mit in der Wahrnehmung unterschiedlichen Markierungselementen, etwa unterschiedlich großen oder unterschiedlich vielen Markierungselementen, oder auch mit in Form von Ziffern angeordneten Markierungselementen gekennzeichnet sein. Der Abstand benachbarter Markierungselemente kann als Inkrement für eine Bestimmung der Orientierung, also dem konkreten Drehwinkel, um den das proximale Ende gegenüber einer NullPosition gedreht ist, verwendet werden. Derartige Markierungselemente können damit eine Art Kompassrose darstellen und ermöglichen es einem Bediener, von einem feststehenden Anzeigeelement aus die aktuelle Blickrichtung dem konkreten Drehwinkel des abbildenden optischen Elements und damit dem Sichtbereich zuzuordnen. Dies ist insbesondere bei einer Außenbeobachtung mit einer Rotation um mehr als 360° sehr hilfreich, um die Außen-Orientierung des Bedieners bei einem Blick auf das Anzeigeelement zu erleichtern.

Die Markierungselemente können besonders einfach im Bereich des distalen oder proximalen Endes des bildleitenden Elements oder auch durchgängig im Faserbündel angeordnet sein, also objektivseitig oder anzeigeseitig, aber auch an anderer Stelle innerhalb des bildleitenden Elements.

Selbstverständlich ist es auch möglich, in einer weiteren bevorzugten Ausführungsform der Erfindung IR-Fasern mit den vorstehend genannten Markierungselementen zu kombinieren, also für das bildleitende Element einen hochauflösenden faseroptischen Bildleiter mit IR-Fasern und zusätzlichen Markierungselementen zu verwenden.

Das Anzeigeelement kann eine passive optische Komponente, vorzugsweise ein Okular, umfassen, mit dem ein Beobachter rein optisch das erfasste Bild mit dem menschlichen Auge wahrnehmen kann.

Das Anzeigeelement kann alternativ oder zusätzlich auch weitere aktive insbesondere opto-elektronische Komponenten umfassen, vorzugsweise zur Fernübertragung des Bildes. Dies ermöglicht eine Übertragung der aus dem umkehrenden Reflexionsprisma ausgekoppelten Lichtstrahlen zu einer hiervon beabstandeten Beobachterposition. Dies kann beispielsweise in eher engen, geschützten Räumen wie in einem besonders geschützten Fahrzeug von Vorteil sein, wenn das erfindungsgemäße optische Gerät zur Außenbeobachtung eingesetzt werden soll, das übertragene Bild dann aber zu einem zentralen Ort innerhalb des geschützten Raumes transportiert werden soll. In einer besonders bevorzugen Ausführungsform umfasst daher das Anzeigeelement daher einen hochauflösenden faseroptischen Bildleiter. Dieser kann ebenfalls starr oder flexibel ausgebildet sein.

Auf diese Weise ist es besonders einfach möglich, unabhängig von der Verfügbarkeit von elektrischer Energie mit dem erfindungsgemäßen optischen Gerät auf rein optischer Basis eine anschlaglos Rundumbeobachtung außerhalb und/oder innerhalb eines besonders geschützten Raumes durchführen zu können.

Der Abstand zwischen dem Ort der Bilderfassung und dem Ort der Visualisierung wird dabei, insbesondere bei einer Verwendung von faseroptischen Bildleitern, lediglich durch die verfügbare Länge dieser faseroptischen Bildleiter begrenzt. Bei einer Länge von ein bis zwei Metern eines faseroptischen Bildleiters kann der Beobachter daher in einem Abstand von 1 m oder mehr, von 2 m oder mehr sogar noch darüber hinaus von dem Ort der Bilderfassung beabstandet eine anschlaglose Rundumbeobachtung vornehmen, was unter Sicherheitsaspekten ein großer Vorteil sein kann.

Eine derartige Außenbeobachtung kann, beispielsweise bei einer Verwendung für ein besonders geschütztes Fahrzeug, auch mehrere derartige optische Geräte umfassen, welche beispielsweise an den Fahrzeugecken oder Türmen angebracht sein können. Hier kann es sich anbieten, die Bilder dieser optischen Geräte an einem zentralen Ort zur gemeinsamen Beobachtung zusammenzuführen.

In diesem Zusammenhang ist es auch denkbar, das aus dem umkehrenden Reflexionsprisma ausgekoppelte Bild über eine Kamera zur Videoübertragung einzukoppeln und elektronisch an einen anderen Ort zu übertragen. Sofern sich derartige aktive opto-elektronischen Systeme zur Fernübertragung auf der nicht exponierten Seite der schützenden Hülle befinden, so ist hier die Gefahr durch von außen einwirkende Einflüsse oder Kräfte als deutlich geringer einzustufen, so dass eine Verwendung derartige Elemente auf der geschützten Seite einer schützenden Hülle als eher unkritisch erachtet wird. Hierbei ist allerdings zu berücksichtigen, dass die opto-elektronischen Systeme Strom benötigen, was einen Notbetrieb erschweren kann.

Im Strahlengang des optischen Gerätes können weitere Applikationen bzw. optische Elemente vorgesehen sein, angeordnet beispielsweise zwischen dem proximalen Ende des bildleitenden Elements und dem Anzeigeelement. Dies können beispielsweise Linsen oder Linsensysteme sein, etwa eine Fokussierlinse zwischen der Lichtaustrittsfläche des bildleitenden Elements und dem umkehrenden Reflexionsprisma, welche die Lichtstrahlen auf die Eintrittsfläche des umkehrenden Reflexionsprismas fokussieren kann. Weiterhin kann auch beispielsweise zumindest ein optisches Filterelement vorgesehen sein. Für einen Einsatz bei Nacht können beispielsweise ND-Filter beziehungsweise Graufilter vorgesehen sein, um eine gleichmäßige Abdunkelung im Bild zu erreichen. Zur Vermeidung von unerwünschten optischen Effekten, etwa eines Moiree-Effektes, kann ein entsprechender Lowpass-Filter vorgesehen sein.

Die Rotationsbewegung des bildleitenden Elements erfolgt vorzugsweise auf rein mechanischem Wege, etwa mittels einer Drehmechanik. Hierzu kann ein form- und/oder reibschlüssiger Zugmitteltrieb bzw. ein Zugmittelgetriebe vorgesehen sein, wobei der Bediener auf der geschützten Seite eine Antriebswelle, beispielsweise mit Hilfe einer Kurbel, manuell und mechanisch bewegen kann und das so erzeugte Drehmoment im Betrieb dann abtriebsseitig auf das bildleitende Element entsprechend übertragen werden kann. Günstigerweise sind hierzu geeignete Spannmittel vorgesehen, welche vorzugsweise ebenfalls auf der geschützten Seite angeordnet sind. Um dem Dehnschlupf entgegenzuwirken, können beispielsweise Zahnriemen zum Einsatz kommen.

Es können auch ein Seilzug oder ein Bowdenzug vorgesehen sein, auch in Verbindung mit entsprechenden Umlenkungen. Dies ermöglicht es einem Bediener des optischen Gerätes, die Blickrichtung des bildleitenden Elements des optischen Geräts rein manuell zu steuern, und zwar auch von einem zu dem optischen Gerät beabstandeten Ort aus. Dieser Ort kann von Vorteil derselbe Ort sein, an dem auch die Beobachtung erfolgt, so das der Bediener selbständig die Blickrichtung steuern kann.

Vorzugsweise umfasst die Drehmechanik weiterhin ein Getriebe, vorzugsweise eine Getriebeanordnung, welche eine gleichzeitige Rotation von bildleitendem Element und Reflexionsprisma ermöglicht. Dabei kann beispielsweise das proximale Ende des bildleitenden Elements fest mit einem Zahnrad, insbesondere einem Kegelrad, verbunden sein, welches mit einem weiteren Zahnrad, insbesondere einem Ritzel, im Eingriff stehen kann. Das umkehrende Reflexionsprisma kann mit einem weiteren Zahnrad, insbesondere einem Kegelrad, fest verbunden sein, welches ebenfalls im Eingriff mit dem Ritzel stehen kann. Die Zähnezahl der beiden Kegelräder ist dann vorzugsweise derart ausgewählt, dass sichergestellt wird, dass ein Dove-Prisma entgegen der Hälfte des Winkelwertes gedreht wird, um den das proximale Ende des bildleitenden Elements gedreht wird.

Um einen flexiblen, vielseitigen Einsatz zu ermöglichen, soll das optische Gerät möglichst klein sein, so dass sein Einbau wenig Platz erfordert. Eine Ausführung mit zumindest einem faseroptischen Bildleiter anstelle von Spiegeln oder optischen Tunnelsystemen bietet nicht nur den Vorteil eines geringeren Raumbedarfes, sondern auch eine Gewichtsersparnis. Auch ein geringes Gewicht des optischen Gerätes erhöht die Einsatzmöglichkeiten deutlich. Von Vorteil wiegt daher das optische Gerät weniger als 10 kg, bevorzugt weniger als 8 kg und besonders bevorzugt weniger als 7 kg. Für das umgebende Gehäuse können, um dieses zu unterstützen, Leichtgewichtsmaterialien verwendet werden, beispielsweise Aluminiummaterialien oder geeignete Kunststoffe. Im Hinblick auf die einwirkenden Kräfte wird dies auch als eher unkritisch erachtet, sofern das optische Gerät beziehungsweise seine wesentlichen Bestandteile auf der nicht exponierten Seite der schützenden Hülle montiert wird.

Weiterhin von Vorteil ist das optische Gerät modular aufgebaut und/oder mit gängigen Adaptern ausgestattet. Auf Seiten des bildleitenden Elements bedeutet dies, dass das distale Ende eine standardisierte Aufnahme zum Anschluss gängiger Objektive umfassen kann. Dies ermöglicht es, das Objektiv rasch auszutauschen, etwa infolge eines Defekts oder auch, um ein anderes Sichtfeld ("Field of view") abbilden zu können, beispielsweise durch Montage eines sogenannten "Fish-eye"-Objektivs. Hierzu kann ein genormter Gewindeanschluss für Kameraobjektive vorgesehen sein, der beispielsweise dem C-Mount-System entspricht und damit die Montage von C-Mount-Objektiven ermöglicht.

Auf der Okularseite bedeutet ein modularer Aufbau, dass ein Austausch zwischen einem optischen Okular und anderen optischen oder opto-elektronische Vorrichtungen wie beispielsweise einer Kamera ermöglicht wird.

Von Vorteil ist auch zumindest das bildleitende Element lösbar und damit einfach austauschbar mit dem optischen Gerät bzw. der schützenden Hülle verbunden, da es in den meisten Anwendungsfällen auf der exponierten Gefahrenseite angeordnet ist und hierdurch ein größeres Schadensrisiko und eine höhere Ausfallwahrscheinlichkeit gegeben ist.

Das erfindungsgemäße optische Gerät kann vielfältig verwendet werden. Ein großes Einsatzgebiet stellt die anschlaglose, vorzugsweise rein optische und/oder stromlose Rundumbeobachtung eines Außenbereiches aus einem geschützten Raum bzw. aus einem Beobachtungsraum heraus dar.

Vorzugsweise ist hierbei nur das bildleitende Element oder sogar nur das distale Ende des bildleitenden Elements außerhalb auf der exponierten Seite der schützenden Hülle angeordnet, so dass das Anzeigeelement und/oder das umkehrende Reflexionsprisma im Inneren des geschützten Raumes angeordnet sein können, also auf der nicht exponierten Seite der schützenden Hülle, und auf diese Weise besonders geschützt sind. Das Bild kann dann mittels des bildleitenden Elements durch eine kleine Öffnung durch die schützende Hülle von außen nach innen zu dem Reflexionsprisma bzw. dem Anzeigeelement geführt werden.

Selbstverständlich ist es auch möglich, lediglich das Anzeigeelement in dem geschützten Raum anzuordnen, wobei dann aber das umkehrende Reflexionsprisma zumindest teilweise auf der exponierten Seite angeordnet ist und damit im Gefahrenbereich liegen kann. Die Bildübertragung in das Innere des geschützten Raumes kann in diesem Fall beispielsweise auch über das Anzeigeelement erfolgen, sofern dieses ebenfalls mit einer geringen Querschnittsfläche wie vorstehend erläutert ausgeführt ist.

Der Raum kann in einer besonders bevorzugten Ausführungsform ein geschützter Raum etwa eines Fahrzeugs sein, beispielsweise eines gepanzerten Fahrzeuges, aber auch ein geschützter Raum eines Flugzeuges oder Schiffes, welches bemannbar ausgebildet sein kann und wobei zum Schutz der Insassen im Einsatz das optische Gerät zur Außenbeobachtung eingesetzt werden kann. Der Raum kann selbstverständlich auch ein stationärer Beobachtungsraum sein. Zumindest das Anzeigeelement kann dabei innerhalb des geschützten Raumes angeordnet sein.

Zur Bildübertragung in das Innere des geschützten Raumes ist eine entsprechende Öffnung in der schützenden Hülle vorgesehen, welche vorzugsweise korrespondiert zu der Querschnittsfläche des zur Bildübertragung durch die Hülle hindurch vorgesehenen Bauelements des optischen Gerätes. Die erforderliche Querschnittsfläche in der schützenden Hülle kann dabei vorzugsweise weniger als 500 mm², bevorzugt weniger als 400 mm², besonders bevorzugt weniger als 300 mm², ganz besonders bevorzugt weniger als 200 mm² oder sogar weniger als 150 mm² betragen, um die mechanische Festigkeit möglichst wenig zu beeinträchtigen.

Das bildleitende Element kann mittels flexibler hochauflösender faseroptischer Bildleiter verwirklicht werden, welche an oder in einen unbemannten, außerhalb des geschützten Raumes angeordneten Turm geführt werden können, welcher bei modernen, gegebenenfalls fernbedienten oder fernbedienbaren aktiven oder passiven Beobachtungs- oder Operationsstationen häufig eingesetzt wird. Die Bewegung des distalen Endes des bildleitenden Elements, und damit die konkrete Position der Lichteintrittsfläche bzw. der Sichtbereich des optischen Gerätes, kann dabei beispielsweise mit einer Zielvorrichtung gekoppelt werden.

Hierdurch ermöglicht die Erfindung auch einen Notbetrieb beispielsweise unbemannter fernbedienter oder fernbedienbarer Beobachtungs- oder Operationsstationen, etwa bei Ausfall elektrischer Systeme.

Demzufolge ist von der Erfindung mit umfasst in einem weiteren Aspekt eine Beobachtungs- oder Operationsstation, insbesondere eine stationäre oder bewegliche Beobachtungs- oder Operationsstation, welche ein erfindungsgemäßes optisches Gerät umfasst. Dabei können die Position eines Bedieners der Beobachtungs- oder Operationsstation und die optische Beobachtungs- oder Operationseinrichtung voneinander räumlich getrennt sein.

Das bildleitende Element kann aber auch zum Beispiel einen gebogenen, starren faseroptischen Bildleiter oder, in einer Weiterbildung der Erfindung, ein einfaches Spiegelelement bzw. ein Prisma umfassen, wodurch Strahlen senkrecht zur optische Achse des umkehrenden Reflexionsprismas auf diese optische Achse umgelenkt werden können. Dies ermöglicht eine sehr kompakte Bauform des bildleitenden Elements.

Ein weiteres großes Einsatzgebiet stellt in einem weiteren Aspekt der Erfindung die anschlaglose, vorzugsweise rein optische und/oder stromlose Rundumbeobachtung des Innenbereiches eines geschützten Raumes von außen dar, wobei zumindest das Anzeigeelement außerhalb des geschützten Raumes angeordnet ist, und nur das bildleitende Element, bevorzugt nur das distale Ende des bildleitenden Elements, in den Innenbereich des geschützten Raumes geführt wird.

Dies kann in einer besonders bevorzugten Ausführungsform ein geschützter Raum im industriellen Bereich oder im medizinischen Bereich oder im Forschungsumfeld darstellen, z.B. ein Magnetfeldraum oder ein besonders geschützter Raum, in dem der Einsatz von elektrischen oder opto-elektronischen Beobachtungssystemen wie etwa Kameras nicht möglich ist, beispielsweise wegen vorherrschender Magnetfelder, Funkenrisiken oder auch wegen großer Hitze.

Die Erfindung stellt damit in einem nochmals weiteren Aspekt auch eine Inspektionsvorrichtung zur Innenbeobachtung oder im Rahmen des maschinellen Sehens mit anschlagloser Rundumsichtmöglichkeit zur Verfügung.

Die Rundumbeobachtung kann damit durch einen Bediener auf der nicht exponierten Seite der schützenden Hülle erfolgen, wobei eine Abbildung des Sichtbereichs des abbildenden optischen Elements auf der exponierten Seite der schützenden Hülle dann in Form eines geordneten Strahlenbündels durch eine Öffnung in der schützenden Hülle geführt werden kann.

Die Vorteile der vorliegenden Erfindung liegen zusammenfassend darin, dass eine Übertragung von Bildern von einer rotierenden Objektivseite, auf der ein im Sichtbereich liegender Abschnitt als Bild eingekoppelt wird, zu einer feststehenden Okularseite, auf der eine Auskoppelung, beispielsweise in das menschliche Auge oder auch in eine Kamera, ermöglicht wird. Bei Auskoppelung direkt in das menschliche Auge ist eine vollständig stromlose, rein optische Bildübertragung möglich, welche damit auch einen Notbetrieb, etwa bei Ausfall der Stromversorgung, bereitstellt.

Gleichzeitig kann durch das erfindungsgemäße optische Gerät die notwendige Größe der Öffnung in der schützenden Hülle auf die minimale Querschnittsfläche des bildleitenden Elements reduziert werden, was zu einer deutlichen Risikominimierung der Hüllenschwächung beiträgt und damit hilft, weitere Risikofaktoren im Zusammenhang mit unterschiedlichen geschützten Räumen zu reduzieren.

Weitere Einzelheiten der Erfindung ergeben sich aus der Beschreibung der dargestellten Ausführungsbeispiele und den angefügten Ansprüchen.

### Die Zeichnungen zeigen:

- Fig. 1: ein optisches Gerät in einer ersten Ausführungsform in einer Schrägansicht,
- Fig. 2: das optische Gerät aus Fig. 1 in einer Draufsicht in einem Teilschnitt,
- Fig. 3: Ein optisches Gerät in einer zweiten Ausführungsform in einer Schrägansicht
- Fig. 4: das optische Gerät aus Fig. 3 in einer Schrägansicht in einem Teilschnitt,
- Fig. 5: eine Draufsicht auf ein besonders geschütztes Fahrzeug, ausgerüstet mit einem erfindungsgemäßen optischen Gerät,
- Fig. 6: den Strahlengang bei einem optischen Gerät nach Fig. 3 oder 4,
- Fig. 7: eine Draufsicht auf eine stationäre, ferngelenkte oder fernlenkbare Beobachtungs- oder Operationsstation,
- Fig. 8: eine Draufsicht auf einen Ausschnitt einer schützenden Hülle mit Öffnungen für die Aufnahme erfindungsgemäßer optischer Geräte,
- Fig. 9: einen faseroptischen Bildleiter in einem Querschnitt, und
- Fig. 10: eine weitere Draufsicht auf eine stationäre, ferngelenkte oder fernlenkbare Beobachtungs- oder Operationsstation.

### Detaillierte Beschreibung bevorzugter Ausführungsformen

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen. Zur besseren Verdeutlichung der Erfindung sind die in den Figuren dargestellten bevorzugten Ausführungsformen jedoch nicht immer maßstabsgerecht gezeichnet.

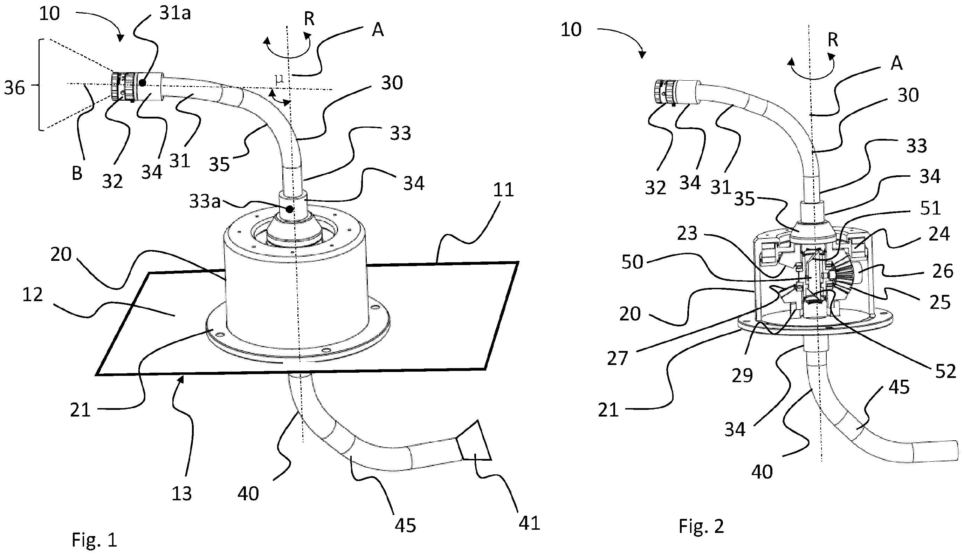

Ein erfindungsgemäßes optisches Gerät 10 gemäß einer ersten Ausführungsform der Erfindung zeigt Fig. 1 in einer Schrägansicht. Das abgebildete optische Gerät 10 umfasst ein Gehäuse 20, welches ein umkehrendes Reflexionsprisma beherbergt, und ein bildleitendes Element 30 mit einem distalen Ende 31 und einem proximalen Ende 33. Das Anzeigeelement 40 ist ohne Beschränkung auf das abgebildete Ausführungsbeispiel ähnlich dem bildleitenden Element 30 gebogen ausgeführt und umfasst ein nur schematisch angedeutetes Okular 41 für einen Beobachter.

Das erfindungsgemäße optische Gerät 10 ist in Fig. 2 zusätzlich in einer Draufsicht in einem Teilschnitt abgebildet. Der Teilschnitt betrifft das Gehäuse 20. In dem Teilschnitt ersichtlich ist ein umkehrendes Reflexionsprisma 50, im Beispiel ein Dove-Prisma, derart in dem Gehäuse 20 angeordnet, dass aus dem bildleitenden Element 30 austretende Lichtstrahlen das Reflexionsprisma 50 in Längsrichtung, also parallel zu seiner optischen Achse durchqueren können. Zur Vereinfachung der Montage ist ein Montageflansch 21 vorgesehen, der es ermöglicht, das optische Gerät 10 fest und für einen einfachen Austausch lösbar mit einer in der Fig. 1 nur schematisch zur Veranschaulichung angedeuteten schützenden Hülle 11 zu verbinden.

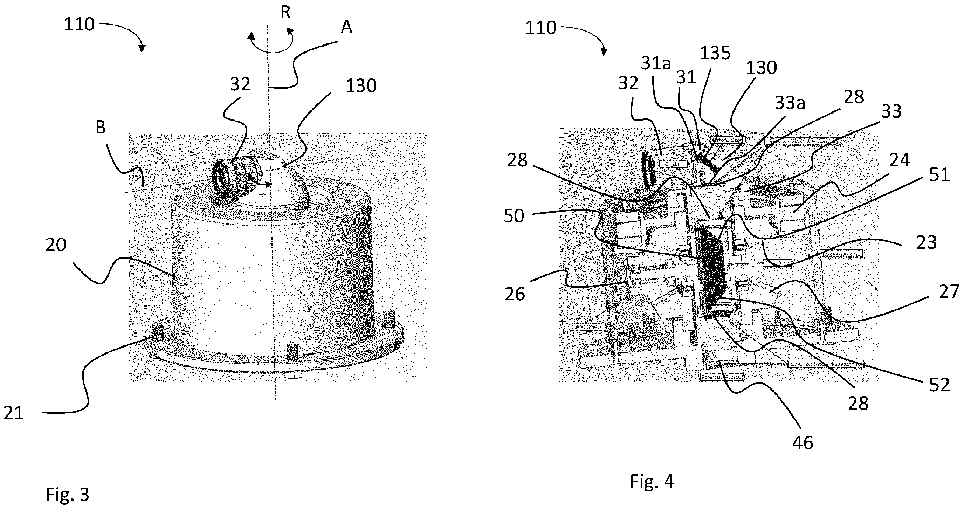

Ein ebenfalls erfindungsgemäßes optisches Gerät 110 gemäß einer zweiten Ausführungsform zeigt Fig. 3 in einer Schrägansicht und Fig. 4 in einer Schrägansicht in einem Teilschnitt. Im Gegensatz zu der gebogenen Ausführungsform des bildleitenden Elements 30 des in den Figuren 1 und 2 gezeigten optischen Geräts 10 ist bei dem optischen Gerät 110 das bildleitende Element 130 in einer sehr kompakten, abgewinkelten Ausführungsform gezeigt.

Die in den Figuren 1 bis 4 gezeigten Ausführungsformen des Gehäuses 20 mit dem Montageflansch 21 sind für eine Außenmontage des optischen Gerätes 10, 110 angeordnet, also zur Verbindung mit der Außenseite, also der exponierten Seite 12, der schützenden Hülle. Dies führt dazu, dass das Anzeigeelement 40 auf der geschützten Seite 13 der schützenden Hülle 11 angeordnet ist und demzufolge durch die schützende Hülle 11 geschützt ist. Selbstverständlich handelt es sich hierbei nur um eine von mehreren möglichen Ausführungsformen, insbesondere ist es auch vorgesehen, das optische Gerät 10, 110 mit seinen wesentlichen Bauelementen innerhalb, also auf der nicht-exponierten Seite 13 der schützenden Hülle 11 anzuordnen, um nicht nur das Anzeigeelement 40, sondern auch das Gehäuse 20 mit dem umkehrenden Reflexionsprisma 50 zu schützen.

Das distale Ende 31 des bildleitenden Elements 30 umfasst eine Lichteintrittsfläche 31a, welche in dem Ausführungsbeispiel mit einem abbildenden optischen Element 32 zum Erfassen der Lichtstrahlen eines im Sichtbereich liegenden Objektes gekoppelt ist. Im Beispiel ist hierfür ein Objektiv vorgesehen, welches über einen Adapter 34, welcher die Lichteintrittsfläche 31a in der gezeigten Ansicht verdeckt, mit dem distalen Ende 31 des bildleitenden Elements 30 verbunden ist.

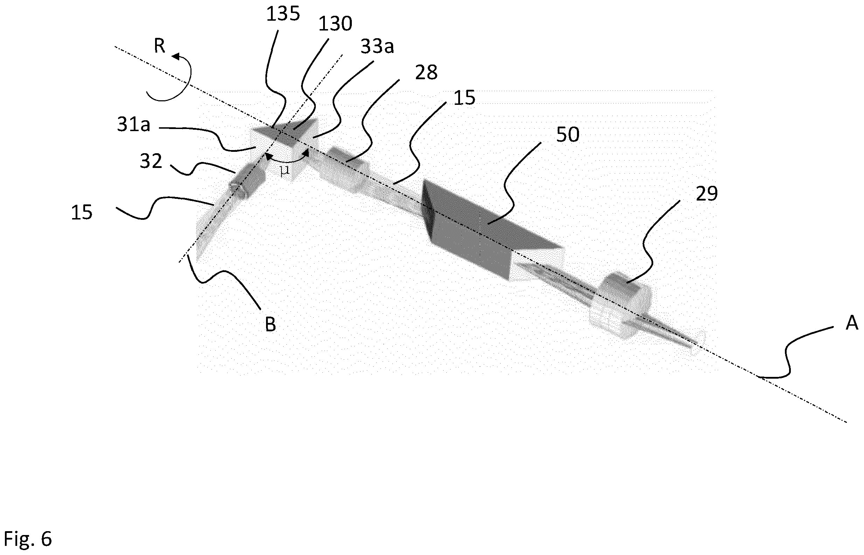

Im Strahlengang des optischen Gerätes 10 ist in dem Ausführungsbeispiel zumindest ein weiteres optisches Element 28 zum Auskoppeln und Fokussieren der Lichtstrahlen des bildleitenden Elements 30 auf die Eintrittsfläche 51 des umkehrenden Reflexionsprismas 50 vorgesehen. Ferner ist ein weiteres optisches Element 29 vorgesehen, welches Lichtstrahlen von dem umkehrenden Reflexionsprisma 50 kommend auf das Anzeigeelement 40 richtet. Rein schematisch ist diese Anordnung der optischen Elemente 28, 29 in dem Ausführungsbeispiel der Fig. 6 gezeigt.

In dem Ausführungsbeispiel der Fig. 2 ist das optische Element 28 als Fokussierlinse ausgebildet. Mit dem bildleitenden Element 30 übertragene Lichtstrahlen werden auf das Umkehrprisma 50 gerichtet und durchlaufen dieses in einer Richtung parallel zu der optischen Achse. Dies bedeutet, dass die Oberflächennormale der Lichtaustrittsfläche 33a des bildleitenden Elements 30 und die optische Achse des Dove-Prismas parallel zueinander liegen. Das Reflexionsprisma 50 verfügt über zwei im gleichen Winkel gegenüber einer Basisfläche geneigte Flächen 51, 52, durch welche die Lichtstrahlen ein- und austreten können. Bei Durchtritt eines Strahlenbündels erfolgt eine Bildumkehr.

Bei einer Anordnung wie in Fig. 2 gezeigt werden im Betrieb Lichtstrahlen an der Eintritts- und Austrittsfläche 51, 52 des Dove-Prismas, welche parallel zur Basisfläche des Dove-Prismas verlaufen, zweimal gebrochen mit der Wirkung einer einzigen Spiegelung. Nachdem die Lichtstrahlen das umkehrende Reflexionsprisma 50 durchdrungen und dabei eine zweimalige Spiegelung erfahren haben, werden die Lichtstrahlen über die Austrittsfläche 52 des Dove-Prismas ausgekoppelt und auf das Anzeigeelement 40 gerichtet.

Die Erfindung ermöglicht es, dass das bildleitende Element 30 anschlaglos um mehr als 360° um eine Drehachse A parallel zur optischen Achse des umkehrenden Reflexionsprismas 50 rotierbar angeordnet und gelagert ist. Damit werden auch das distale Ende 31 des bildleitenden Elements 30 und damit der Sichtbereich des abbildenden optischen Elements 32 relativ zu dem feststehenden Anzeigeelement 40 geschwenkt.

Baulich ist in dem Ausführungsbeispiel das Anzeigeelement 40 fest an dem Gehäuse 20 montiert, wobei das Dove-Prisma und das bildleitende Element 30 drehbar um die im Beispiel strichpunktiert dargestellte Drehachse A gelagert ist. Die Rotationsbewegung im Betrieb ist in der Fig. 1 mit "R" gekennzeichnet. Die Drehachse A des bildleitenden Elements 30 fällt in dem abgebildeten Ausführungsbeispiel mit der optischen Achse des Dove-Prismas zusammen, wie auch aus der Fig. 2 ersichtlich, und ermöglicht einen besonders einfachen und kompakten Aufbau. Die optische Achse des Reflexionsprismas 50 bildet demnach die Drehachse A, um welche das bildleitende Element 30 im Betrieb rotiert werden kann.

Eine Drehung des bildleitenden Elements 30 relativ zu dem feststehenden Anzeigeelement 40 um diese Drehachse A ermöglicht die erfindungsgemäße anschlaglose Rundumbeobachtung beziehungsweise eine Rundumüberwachung mit einem Umkreis von mehr als 360°.

Die Drehbewegung des bildleitenden Elements 30 erfolgt stromlos, also rein mechanisch, was insbesondere bei einem Ausfall elektrischer Systeme, etwa infolge eines Stromausfalls, von großem Vorteil ist. Die anschlaglose Rundumbeobachtung mit einer Rotation des bildleitenden Elements 30 von mehr als 360° um die Drehachse A ermöglicht damit überraschend einfach eine Rundumüberwachung eines Raumes auf der exponierten Seite 12 der schützenden Hülle 11 von einem hierzu feststehenden Anzeigeelement 40 aus, welches auf der gegenüberliegenden, geschützten Seite 13 der Hülle 11 angeordnet ist.

Das erfindungsgemäße optische Gerät 10, 110 bietet damit den großen Vorteil, unabhängig von der Verfügbarkeit von Strom auf rein optischer Basis eine anschlaglos Rundumbeobachtung außerhalb oder innerhalb eines besonders geschützten Raumes durchführen zu können.

Das bildleitende Element 30 und das Anzeigeelement 40 sind gebogen ausgeführt und umfassen in dem in Fig. 1 und 2 gezeigten Ausführungsbeispiel jeweils einen hochauflösenden faseroptischen Bildleiter 35, 45.

Zumindest einer der hochauflösenden faseroptischen Bildleiter umfasst dabei einen Abschnitt, in welchem die Querschnittsfläche weniger als 500 mm², bevorzugt weniger als 400 mm² und besonders bevorzugt weniger als 300 mm² beträgt. In einer ganz besonders bevorzugten Ausführung beträgt diese Querschnittsfläche weniger als 200 mm² und sogar weniger als 150 mm² oder weniger als 100 mm². In dem Ausführungsbeispiel sind beide hochauflösende faseroptische Bildleiter 35, 45 von konstantem Querschnitt über die Länge ausgebildet. In dem gezeigten Ausführungsbeispiel liegt die Querschnittsfläche des hochauflösenden faseroptischen Bildleiters 35, 45 bei lediglich 100 mm². Dies ermöglicht es, eine in die schützende Hülle 11 einzubringende Öffnung 14 dementsprechend mit geringer Ausdehnung gestalten zu können. Eine derartige Minimalisierung der erforderlichen Öffnung 14 bedeutet eine enorme Minimierung des Verlustes mechanischer Festigkeit der schützenden Hülle 11 infolge der Öffnung 14.

Die in den Figuren 1 und 2 gezeigte Ausführungsform bietet eine sehr große Flexibilität, da sowohl das bildleitende Element 30 als auch das Anzeigeelement 40 einen hochauflösenden faseroptischen Bildleiter geringen Querschnitts umfassen, so dass das Gehäuse 20 sowohl auf der exponierten als auch auf der nicht-exponierten, geschützten Seite 13 der schützenden Hülle 11 angeordnet sein kann. Die Bildübertragung durch die schützende Hülle 11 hindurch kann dabei sowohl mittels des bildleitenden Elements 20 als auch mittels des Anzeigeelement 40 erfolgen. In beiden Fällen ist nur eine sehr kleine Öffnung 14 erforderlich.

In dem Beispiel umfassen die hochauflösenden faseroptischer Bildleiter 35, 45 jeweils Lichtleitfasern, wobei der Durchmesser der einzelnen Lichtleitfasern 12 µm oder weniger, bevorzugt 10 µm oder weniger, besonders bevorzugt 7 µm oder weniger beträgt. In dem Ausführungsbeispiel beträgt der Durchmesser einer einzelnen Lichtleitfaser 10 µm, wobei der Bildleiter 35, 45 eine Gesamtzahl von etwa 160.000 Lichtleitfasern umfasst. Hiermit ist es möglich, für das optische Gerät 10, 110 eine Auflösung in einem Bereich von etwa 45 LP/mm (Linienpaare/mm) zur Verfügung stellen. Ein derartiger hochauflösender faseroptischer Bildleiter ist für das optische Gerät besonders gut geeignet und bietet hervorragende Sichtmöglichkeiten, auch im Fernbereich von 500 m und mehr. Der hochauflösende faseroptische Bildleiter ist in dem Ausführungsbeispiel als flexibler Bildleiter ausgebildet.

Der hochauflösende faseroptische Bildleiter 35, 45 und vorzugsweise das optische Gerät 10, 110 verfügen über eine große Temperaturbeständigkeit in einem Bereich von wenigstens -20°C bis zu 100°C, bevorzugt von -40°C bis +125°C, und genügen damit der Norm MIL-STD-810H (2019), so dass eine Verwendung im Geltungsbereich der Norm möglich ist.

In dem Ausführungsbeispiel weist der hochauflösende faseroptische Bildleiter 35, 45 jeweils eine Länge von etwa 200 mm auf und ermöglicht damit zudem eine sehr kompakte Bauform. Es sind aber selbstverständlich aber auch andere Längen möglich, welche sich in ihren maximalen Abmessungen an den am Markt verfügbaren Längen orientieren. So sind etwa auch Applikationen möglich, bei denen der hochauflösende faseroptische Bildleiter 35, 45 eine Länge von mehr als 1 m, etwa 2 m oder sogar mehr aufweist und auf diese Weise auch, insbesondere im Fall eines flexiblen hochauflösenden faseroptischen Bildleiters, konturenfolgend verlegt werden kann.

Dies ermöglicht es, das bildleitende Element 30 und/oder das Anzeigeelement 40 sehr flexibel zu verlegen. Die gezeigte Ausführung mit einem flexiblen, hochauflösenden faseroptischen Bildleiter 35, 45 bietet zum Beispiel den Vorteil, dass das bildleitende Element 30 geometrisch sehr gut an die räumlichen Begebenheiten angepasst werden kann. Ein flexibler faseroptischer Bildleiter 35, 45 kann beispielsweise durch die schützende Hülle in einen Turm und/oder zu einem Zielsystem verlegt werden und im Betrieb gleichzeitig mit diesem Zielsystem rotiert werden, insbesondere auch um mehr als 360°.

Eine starre Ausbildung des bildleitenden Elements 30 bietet dagegen den Vorteil, dass keine aufwendigen weiteren Stützkonstruktionen für das bildleitende Element 30 erforderlich werden. So kann das bildleitende Element 30 sehr klein und kompakt ausgebildet sein und zudem über ein sehr geringes Gewicht verfügen.

Die in den Figuren 3 und 4 gezeigte Ausführungsform eines erfindungsgemäßen optischen Gerätes 110 stellt eine diesen Gedanken aufgreifende Ausführungsform der Erfindung dar. Hier wird anstelle eines hochauflösenden faseroptischen Bildleiters für das bildleitende Element 130 ein Übertragungssystem mit einem Spiegel 135 vorgeschlagen, wie es in Fig. 4 ersichtlich ist.

Der Strahlengang dieser Anordnung ist ergänzend in Fig. 6 dargestellt. In dieser Fig. 6 sind die durch das optische Gerät 10, 110 übertragbaren elektromagnetische Strahlen als ein Bündel Lichtstrahlen 15 dargestellt. Ebenfalls ist zur Veranschaulichung schematisch dargestellt ein optisches Element 28 im Strahlengang vorgesehen, welches als fokussierende Linse ausgebildet ist und die Lichtstrahlen auf das umkehrende Reflexionsprisma 50 fokussiert. Der Übersichtlichkeit halber ist bei dieser Darstellung auf ein Anzeigeelement verzichtet worden.

Das bildleitende Element 130 in der dargestellten Anordnung umfasst einen Spiegel 135, welcher im Betrieb in der dargestellten Position Lichtstrahlen 15 entlang der mit "B" gekennzeichneten Achse im rechten Winkel zur optischen Achse umlenkt. Der Spiegel 135 rotiert dabei im Betrieb zusammen mit dem bildleitenden Element 130 um die Drehachse A, die gleichzeitig die optische Achse des umkehrenden Reflexionsprismas 50 ist. Das bildleitende Element 130 umfasst ein abbildendes optisches Element 32.

Es ist dem Fachmann ersichtlich, dass das Anzeigeelement wie unter dem Ausführungsbeispiel der Figuren 1 und 2 ausgeführt sein kann. Die gezeigte Ausführungsform des optischen Gerätes 110 ermöglicht eine besonders kompakte, platzsparende Ausführung des bildübertragenden Elements 130.

Das erfindungsgemäße optische Gerät 10, 110 bietet damit den großen Vorteil, in Verbindung mit einer schützenden Hülle 11 betrieben werden zu können, wobei ein Bediener des optischen Geräts 10, 110 dann im Betrieb auf der sicheren, geschützten Seite 13 der schützenden Hülle 11 über das Anzeigeelement 40 eine Rundumbeobachtung der gegenüberliegenden, exponierten Seite 12 der schützenden Hülle 11 durchführen kann und das Anzeigeelement 40 dabei eine kontinuierliche Visualisierung der im Sichtbereich des bildleitenden Elements 30 liegenden Umgebung ermöglicht. Auf diese Weise ist der Bediener vor möglichen Gefahren oder einwirkenden mechanischen Kräften durch die schützende Hülle 11 geschützt und kann dennoch den gegenüberliegenden Raum oder Bereich sehr umfassend beobachten, wenn die Hülle 11 ansonsten blickdicht ausgebildet ist.

Erfindungsgemäß kann das bildleitende Element 30, 130 gebogen oder abgewinkelt ausgeführt sein, um eine Umlenkung der Lichtstrahlen zu ermöglichen und auf diese Weise den umgebenden Raum vollständig mit einer Umdrehung beobachten zu können.

Die Oberflächennormale der Lichteintrittsfläche 31a und die Oberflächennormale der Lichtaustrittsfläche 33a des bildleitenden Elements 30, 130 stehen demnach in einen Winkel µ zueinander. Bei der in Fig. 1 gezeigten Ausführungsform verläuft die Oberflächennormale der Lichteintrittsfläche 31a parallel zu der mit "B" gekennzeichneten strichpunktierten Linie, welche gleichermaßen die optische Achse des abbildenden optischen Elements 32 des bildleitenden Elements 30 darstellt. Die Oberflächennormale der Lichtaustrittsfläche 33a des bildleitenden Elements 30 verläuft parallel zu der Drehachse A, die in der Ausführungsform gleichermaßen die optische Achse des umkehrenden Reflexionsprismas 50 darstellt.

Bei den in den Figuren abgebildeten Ausführungsformen des optischen Gerätes 10, 110 stehen die beiden Oberflächennormalen in einem rechten Winkel zueinander, so dass gilt: µ = 90°. In bevorzugten Ausführungsformen beträgt dieser Winkel zwischen 5° und 175°, bevorzugt zwischen 20° und 160° und besonders bevorzugt zwischen 30° und 150°. Für eine anschlaglose Rundumüberwachung ist im allgemeinen ein Winkel zwischen 85° und 95° beziehungsweise von 90° sehr gut geeignet.

Das durch das optische Gerät 10, 110 abbildbare Sichtbereich wird vertikal und/oder horizontal durch die Lichteintrittsfläche 31a des bildleitenden Elements 30 oder durch das optische Element 32 begrenzt. Über den Winkel µ kann der abbildbare Sichtbereich dabei in einer vertikalen Richtung verändert oder festgelegt werden. In der Fig. 1 ist rein beispielhaft das Sichtfeld 35 des optischem Elements 32 in seiner vertikalen Ausrichtung dargestellt, demnach also der vertikale Bildwinkel des optischem Elements 32.

Auf diese Weise kann der in vertikaler Richtung abbildbare Sichtbereich an beispielsweise unterschiedliche Einsatzsituationen, an unterschiedliche optische Elemente oder auch allgemein an die optischen Eigenschaften, beispielsweise die Numerische Apertur NA, des konkreten bildleitenden Elements 30 angepasst werden.

In vorteilhafter Weiterbildung der Erfindung ist der Winkel µ variabel einstellbar oder variierbar einstellbar. In einer ganz besonders bevorzugten Weiterbildung der Erfindung ist der Winkel µ auch während einer Rotationsbewegung, also im Betrieb des optischen Gerätes 10, 110, variabel einstellbar oder variierbar einstellbar, so dass ein Bediener des optischen Gerätes 10, 110 im Betrieb den Sichtbereich des optischen Gerätes 10, 110 in vertikaler Ausrichtung zusätzlich verändern kann. Hierzu ist das bildleitende Element 30 vorzugsweise flexibel ausgebildet, um, beispielsweise mit einer rein mechanischen Kippvorrichtung, diesen Winkel µ verändern zu können.

Auch das Anzeigeelement 40 kann dazu ausgebildet sein, beispielsweise in Verbindung mit einem hochauflösenden faseroptischen Bildleiter, eine weitere Umlenkung der Lichtstrahlen ermöglichen. Auf diese Weise ist es z.B. möglich, dass die Blickrichtung des Bedieners mit der Blickrichtung des bildleitenden Elements parallel zueinander liegen, und durch das optische Gerät 10, 110 lediglich ein lateraler Versatz gegeben ist.

Für eine kompakte Bauform ist das abbildende Element 30 in der in Fig. 1 gezeigten Ausführungsform mit einem kleinen Biegeradius von im Beispiel etwa 30 mm ausgebildet. Die in Fig. 3 gezeigte Ausführungsform kann besonders kompakt ausgebildet sein. Der auf der exponierten Seite 12 der schützenden Hülle 11 angeordnete Teil des optischen Gerätes 10, 110 kann dabei auf weniger als 20 cm Bauhöhe begrenzt werden, beispielsweise sind auch Bauhöhen von weniger als 15 cm oder sogar weniger als 10 cm oder noch weniger möglich, was eine vielseitige Verwendung zulässt. Die Bauhöhe auf der exponierten Seite 12 kann nochmals verringert werden, wenn das Gehäuse 20 auf der nicht exponierten Seite 13 angeordnet ist und lediglich das bildleitende Element 30, 130 oder sogar nur Abschnitte des bildleitenden Elements 30, 130 außerhalb auf der exponierten Seite 12 verbleiben. Die verbleibende Bauhöhe wird dann im Wesentlichen durch das abbildende optische Element 32 bestimmt. Dies ermöglicht einen höchst flexiblen, vielseitigen Einsatz, und der Einbau erfordert wenig Platz.

Auf diese Weise ist es besonders gut möglich, unabhängig von der Verfügbarkeit von elektrischer Energie mit dem erfindungsgemäßen optischen Gerät 10, 110 auf rein optischer Basis eine anschlaglos Rundumbeobachtung außerhalb und/oder innerhalb eines besonders geschützten Raumes durchführen zu können.

Die Rotationsbewegung des bildleitenden Elements 30 gegenüber dem Anzeigeelement 40 erfolgt dabei auf rein mechanischem Wege.

Eine Getriebeanordnung zur Rotation des bildleitenden Elements 30 relativ zu dem umkehrenden Reflexionsprisma 50 ist schematisch in den Schnitten der Figuren 2 und 4 zu erkennen. Dabei ist das proximale Ende 33 des bildleitenden Elements 30, 130 fest mit einem Kegelrad 23 verbunden welches mit einem weiteren Zahnrad 26, im Beispiel als Ritzel ausgebildet, im Eingriff steht. Das umkehrende Reflexionsprisma 50 ist dabei mit einem weiteren Kegelrad 27 fest verbunden, welches ebenfalls im Eingriff mit dem Ritzel steht. Die Zähnezahl der beiden Zahnräder bzw. Kegelräder 23, 27 ist derart ausgewählt, dass sichergestellt wird, dass das Dove-Prisma entgegen der Hälfte des Wertes des Rotationswinkels gedreht wird, um den das proximale Ende 33 des bildleitenden Elements 30, 130 gedreht wird. Das umkehrende Reflexionsprisma 50 ist hierzu ebenfalls mit einem weiteren Lager in dem Gehäuse 20 gelagert.

Die Rotationsbewegung erfolgt höchst einfach mit einem Seilzug oder einem Bowdenzug. Dies ermöglicht es einem Bediener, die Blickrichtung des bildleitenden Elements 30, 130 des optischen Geräts 10, 110 rein manuell zu steuern, und zwar von einem zu dem optischen Gerät 10, 110 beabstandeten Ort aus.

Das optische Gerät 10, 110 ist sehr leicht gehalten und wiegt weniger als 10 kg, bevorzugt weniger als 8 kg und besonders bevorzugt weniger als 7 kg. Das abgebildete Gerät 10, 110 wiegt zwischen 2 und 7 kg.

Das optische Gerät 10, 110 ist modular aufgebaut. Hierzu sind das bildleitende Element 30, 130 und das Anzeigeelement 40 mit entsprechenden standardisierten Anschlüssen, etwa dem Montageflansch 21, bzw. Adaptern 34, ausgestattet und lösbar mit dem Gehäuse verbunden, wodurch eine rasche Austauschbarkeit gegeben ist.

Das erfindungsgemäße optische Gerät 10, 110 kann vielfältig verwendet werden. Ein großes Einsatzgebiet stellt die anschlaglose, vorzugsweise rein optische und/oder stromlose Rundumbeobachtung eines Außenbereiches aus einem geschützten Raum heraus dar.

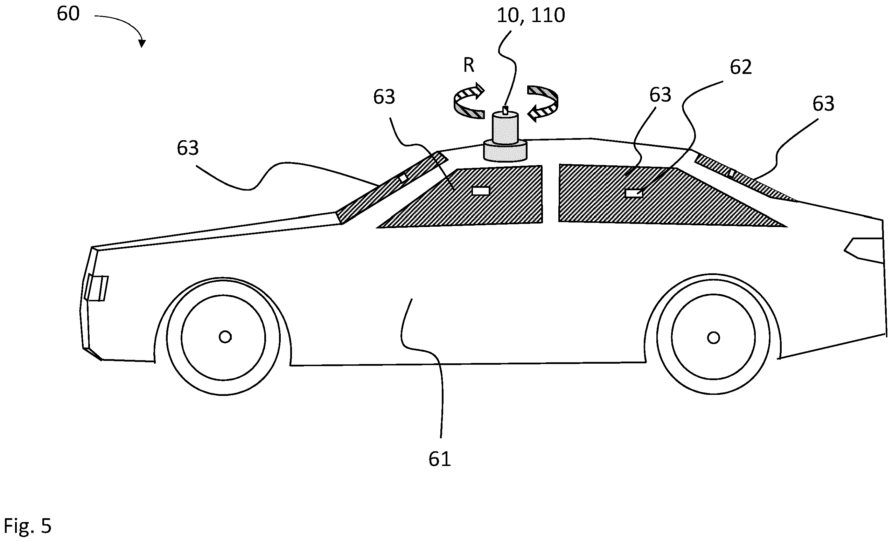

Dies ist in einer besonders bevorzugten Ausführungsform ein geschützter Raum eines Fahrzeugs, beispielsweise eines gepanzerten Fahrzeuges. Fig. 5 zeigt rein exemplarisch ein besonders geschütztes Fahrzeug 60 am Beispiel eines gepanzerten PKW mit Seitenpanzerung 61, welcher zum Schutz der Insassen mit gepanzerten Fensterabdeckungen 63 ausgestattet ist. Auch wenn diese Fensterabdeckungen 63 mit Sehschlitzen 62 ausgestattet sind, so ist funktionsgemäß keine oder eine nur stark eingeschränkte Ausblickmöglichkeit gegeben, welche kaum einen Rundumblick ermöglicht, um den zu schützenden Bereich bzw. die Fensterabdeckungen 63 nicht zu schwächen.

Zwar ist es möglich, um eben eine gewisse Rundumsicht zu gewährleisten, eine Mehrzahl von Elementen, beispielsweise optische Winkelspiegel oder Periskope, welche insbesondere an den Ecken und/oder anderen exponierten Stellen, Anbauten oder Strukturen, beispielsweise einem Turm oder Dom, angeordnet sind, vorzusehen, um einem Beobachter im Inneren des Fahrzeugs eine Außensichtmöglichkeit zu geben.

Diese Art der Rundumsicht ist allerdings lokal durch deren Anordnungsposition sowie durch die Art und zumutbare Größe und Anzahl der Elemente insbesondere auf der Beobachtungsseite eingeschränkt. Ganz abgesehen davon, dass solche Elemente in einem räumlichen Abstand zueinander angeordnet sind, so dass eine nahezu gleichzeitige oder kontinuierliche Beobachtung durch gegebenenfalls nur einen Beobachter unmöglich ist und/oder nicht über 360° um den geschützten Raum darstellbar ist, ohne die zu schützende Struktur zu schwächen.

So sind die Rundumsichtmöglichkeiten daher sehr begrenzt. Hinzu kommt, dass die Winkelspiegel vergleichsweise schwer sind und, aufgrund der großen Anzahl, auch viel Bauraum benötigen. Es ist für einen einzelnen Bediener ferner kaum möglich, den das Fahrzeug umgebenden Außenraum vollständig oder auch nur annähernd vollständig beobachten zu können. Vielmehr sind mehrere Bediener erforderlich, um beispielsweise die Vorder- und die Rückseite des Fahrzeugs 60 beobachten zu können.

Ein großer Nachteil dieser Systeme ist daher ersichtlich darin zu sehen, dass ein Beobachter sich innerhalb des Fahrzeuges in der unmittelbaren Nähe eines Winkelspiegels aufhalten muss, um eine Außenbeobachtung in dem konkreten Sichtbereich durchführen zu können. Daher sind häufig auch eine Vielzahl von Winkelspiegeln erforderlich, um möglichst den gesamten Außenbereich abbilden zu können. Dies führt zu dem bereits erwähnten Nachteil, dass beispielsweise ein Beobachter, welcher den rückwärtigen Raum durch einen hinteren Winkelspiegel beobachtet, keinen Überblick über die Winkelspiegel im vorderen Bereich des Fahrzeuges 60 hat, und damit auch keinen Überblick über das Geschehen vor dem Fahrzeug 60.

Die Erfindung ermöglicht es nun, anstelle der vielen Winkelspiegel lediglich eine geringe Anzahl von beispielsweise vier optischen Geräten 10, 110 an den äußeren Ecken des Fahrzeuges 60, oder wie im Beispiel der Figur 5, ein einziges optisches Gerät 10, 110 etwa mittig auf dem Dach vorzusehen, wobei zur Außenbeobachtung die Bilder an einem zentralen Ort innerhalb des Fahrzeuges zusammengeführt werden können und beispielsweise dem Fahrer des Fahrzeugs 60 visualisiert werden können. Auf diese Weise macht es die Erfindung möglich, dass nur ein einzelner Bediener sämtliche Bereiche, also den vorderen, die seitlichen und/oder den rückwärtigen Bereich der Umgebung des Fahrzeugs 60 erfassen und kontinuierlich beobachten kann.

Zur Bildübertragung durch die schützende Hülle 11 hindurch kann das bildleitende Element 30, 130 oder das Anzeigeelement 40 verwendet werden, wodurch die zu schaffende Öffnung 14 in der schützenden Hülle sehr klein gehalten werden kann, welche im Wesentlichen der Querschnittsfläche des hierfür vorgesehenen Abschnittes des bildleitenden Elements 30, 130 oder des Anzeigeelements 40 entspricht.

Das Anzeigeelement 40 und der Bediener sind durch die Anordnung im geschützten Inneren dann ebenfalls geschützt.

Bei einer Verwendung von flexiblen, hochauflösenden faseroptischen Bildleitern für das bildleitende Element 30 können diese auch an oder in einen unbemannten, außerhalb des geschützten Raumes angeordneten Turm geführt werden, so dass sie bei einer Turmbewegung mitgeführt werden. Die Orientierung des bildleitenden Elements 30 und damit der Sichtbereich des optischen Gerätes 10, 110 können dabei höchst vorteilhaft mit einer Zielvorrichtung gekoppelt werden. Hierdurch ermöglicht die Erfindung auch einen Notbetrieb unbemannter fernbedienter oder fernbedienbarer Beobachtungs- oder Operationsstationen, etwa bei Ausfall elektrischer Systeme.

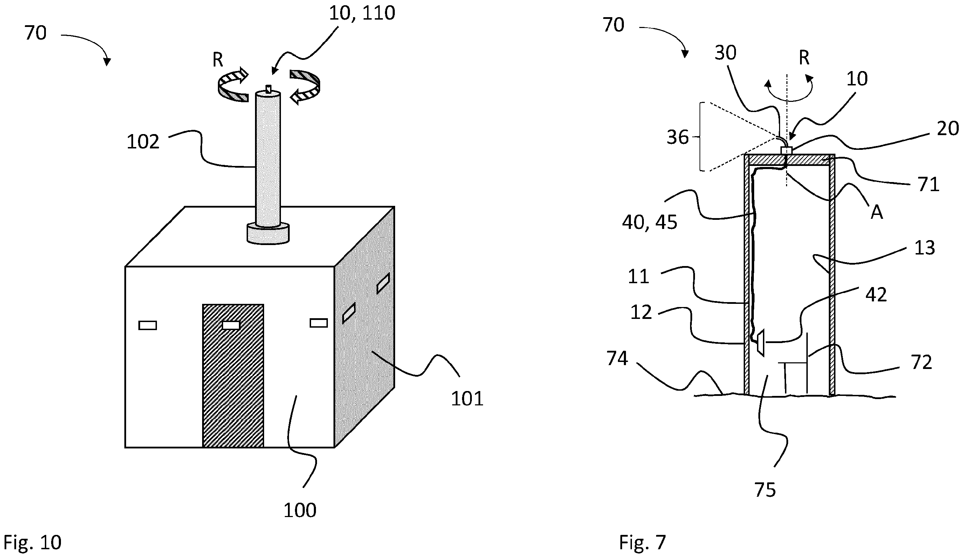

Die Fig. 7 zeigt schematisch rein beispielhaft ohne Beschränkung auf das Ausführungsbeispiel eine fernbediente oder fernbedienbare Operationsstation 70. Diese umfasst eine Montageplattform 71, die im Beispiel einige Meter über dem Boden 74 angeordnet und mit diesem über ein Gerüst mit als schützende Hülle 11 ausgebildeten Seitenwänden verbunden ist. Im Inneren der Operationsstation 70 ist ein mittels der schützenden Hülle 11 geschützter Raum 75 mit einer Bedienerposition 72 vorgesehen, welcher es einem Bediener erlaubt, sich geschützt vor äußeren Einflüssen aufzuhalten.

In der abgebildeten Ausführungsform ist auf der Montageplattform 71 ein optisches Gerät 10 angeordnet, wobei das Gehäuse 20 und das bildleitende Element 30 oberhalb der Montageplattform 71 und damit auf der exponierten Seite 12 angeordnet sind. Das Anzeigeelement 40 umfasst einen hochauflösenden, faseroptischen Bildleiter 45, welcher es ermöglicht, Bilder in das Innere der Operationsstation 70 zu der von dem optischen Gerät 10 einige Meter, im Beispiel zwischen 3 und 5 m, entfernten Bedienerposition 72 zu übertragen. Das Anzeigeelement 40 umfasst hierzu ergänzend eine Einrichtung zur Visualisierung 42, mittels der der Bediener eine Rundumbeobachtung der Umgebung der Station vornehmen kann. Selbstverständlich ist es auch möglich, auf der Montageplattform 71 ein optisches Gerät 110 nach der in den Figuren 3 und 4 gezeigten Ausführungsform anzuordnen.

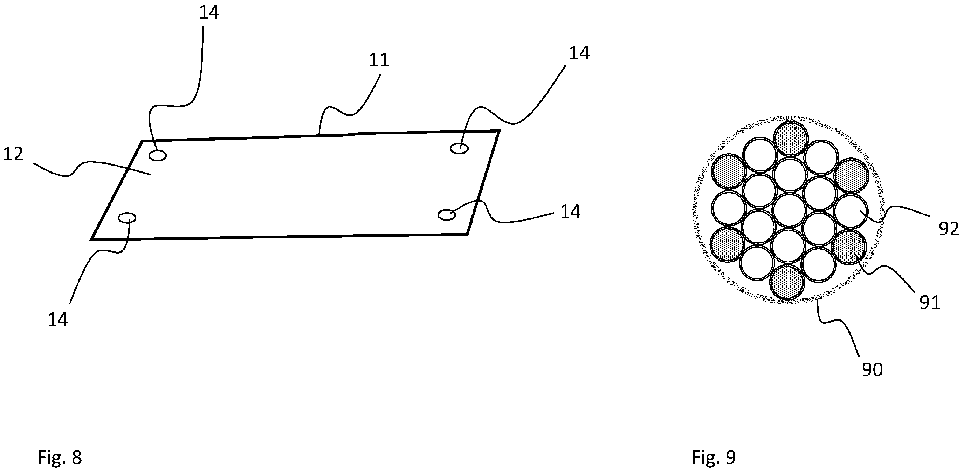

In Fig. 8 ist rein schematisch eine Draufsicht auf einen Ausschnitt einer schützenden Hülle 11 am Beispiel eines Daches für ein geschütztes Fahrzeug 60 abgebildet. Die vier Ecken des Daches sind mit entsprechenden kreisförmigen Öffnungen 14 versehen, welche es ermöglichen, ein bildleitendes Element 30, 130 oder ein Anzeigeelement 40 eines erfindungsgemäßen optischen Gerätes 10, 110 hindurchzuführen. Ein in dieser Weise mit dem erfindungsgemäßen optischen Gerät 10, 110 ausgestattetes Fahrzeug ermöglicht eine anschlaglose Rundumbeobachtung der Umgebung des Fahrzeuges.

Fig. 9 zeigt, ebenfalls rein schematisch, einen einfach aufgebauten faseroptischen Bildleiter mit im Beispiel 19 einzelnen Lichtleitfasern 92 in einer regelmäßigen Anordnung in einem Querschnitt zur Verdeutlichung der Bestimmung der Orientierung des bildleitenden Elements. Der abgebildete faseroptische Bildleiter 90 umfasst insgesamt sechs passive Markierungselemente am Beispiel schwarz eingefärbter Lichtleitfasern 91, welche am äußeren Rand des Faserbündels in regelmäßigen Abständen zueinander angeordnet sind. Im Betrieb kann der Abstand benachbarter Markierungselemente dann als Inkrement für eine Bestimmung der Orientierung, also dem konkreten Drehwinkel, um den das proximale Ende gegenüber einer Null-Position gedreht ist, verwendet werden.

Fig. 10 zeigt schließlich schematisch ein weiteres erfindungsgemäßes Ausführungsbeispiel einer fernbedienten oder fernbedienbaren Operationsstation 70, welches auf dem in Fig. 7 gezeigten Ausführungsbeispiel basiert und dieses weiterentwickelt. Bei diesem Ausführungsbeispiel ist ein Bediener in einem geschützten Gebäude 100 untergebracht, welches über geschützte, insbesondere gepanzerte Seitenwände 111 verfügt. Auf dem Dach ist ein Mast 102 angeordnet, welcher eine Höhe von einigen Metern, beispielsweise 1 m oder auch 2 m, 3 m, 4 m, 5 m oder sogar darüber hinaus, aufweisen kann, und welcher an seinem Kopfende ein optisches Gerät 10, 110 umfasst, welches eine anschlaglose Rundumbeobachtung ermöglicht. Die erreichbare größere Bauhöhe ermöglicht, gerade auch in Verbindung mit einem variierbaren Winkel µ, eine hervorragende Rundumsicht, sowohl im Nahbereich in unmittelbarer Umgebung des Gebäudes 100, als auch im Fernbereich.

Ein weiteres großes Einsatzgebiet stellt die anschlaglose, vorzugsweise rein optische und/oder stromlose Rundumbeobachtung des Innenbereiches eines geschützten Raumes von außen dar, wobei zumindest das Anzeigeelement 40 außerhalb des geschützten Raumes angeordnet ist, um dem Bediener einen hinreichenden Schutz zu gewähren.

### Bezugszeichenliste:

- 10: optisches Gerät
- 11: schützende Hülle
- 12: exponierte Seite
- 13: geschützte Seite
- 14: Öffnung
- 15: Lichtstrahlen
- 20: Gehäuse
- 21: Montageflansch
- 23: Kegelrad
- 26: Zahnrad
- 27: Kegelrad
- 28: optisches Element
- 29: optisches Element
- 30: bildleitendes Element
- 31: distales Ende
- 31a: Lichteintrittsfläche
- 32: abbildendes optisches Element
- 33: proximales Ende
- 33a: Lichtaustrittsfläche
- 34: Adapter
- 35: hochauflösender faseroptischer Bildleiter
- 36: Sichtfeld

- 40: Anzeigeelement
- 41: Okular
- 42: Einrichtung zur Visualisierung
- 45: hochauflösender faseroptischer Bildleiter

- 50: Reflexionsprisma
- 51: Eintrittsfläche
- 52: Austrittsfläche

- 60: Fahrzeug
- 61: Seitenpanzerung
- 62: Sehschlitz
- 63: Fensterabdeckung

- 70: Operationsstation
- 71: Montageplattform
- 72: Bedienerposition
- 73: Anzeigeelement
- 74: Boden
- 75: geschützter Raum

- 100: Gebäude
- 102: Mast
- 111: Seitenwand

- 110: optisches Gerät
- 130: bildleitendes Element
- 135: Spiegel

- A: Drehachse
- B: Drehachse
- R: Rotationsbewegung

## Patentansprüche

1. Optisches Gerät (10, 110) zur hochauflösenden Bildübertragung, durch eine schützende Hülle (11) hindurch, insbesondere zur Außenbeobachtung oder als Inspektionsvorrichtung zur Innenbeobachtung, umfassend:
zumindest ein bildleitendes Element (30, 130) mit einem distalen und einem proximalen Ende (31, 33), ein umkehrendes Reflexionsprisma (50) mit einer Eintritts- und einer Austrittsfläche (51, 52), und ein Anzeigeelement (40),
wobei das distale Ende (31) des bildleitenden Elements (30, 130) eine Lichteintrittsfläche (31a) zum Erfassen von Lichtstrahlen aus der Umgebung und
das proximale Ende (33) des bildleitenden Elements (30, 130) eine Lichtaustrittsfläche (33a) zum Auskoppeln von Lichtstrahlen auf die Eintrittsfläche (51) des umkehrenden Reflexionsprismas (50) umfasst, wobei
im Betrieb des optischen Gerätes nach Durchtritt der Lichtstrahlen durch das umkehrende Reflexionsprisma (50) und einer entsprechenden Achsspiegelung, die Lichtstrahlen über die Austrittsfläche (52) auf das Anzeigeelement (40) gerichtet werden, wobei das bildleitende Element (30, 130) anschlaglos um mehr als 360° um eine Drehachse A parallel zur optischen Achse des umkehrenden Reflexionsprismas (50) relativ zu dem umkehrenden Reflexionsprisma (50) und/oder zu dem Anzeigeelement (40) rotierbar gelagert ist, wobei das proximale Ende des bildleitenden Elements rotierbar gehaltert ist und wobei die Rotation stromlos rein mechanisch erfolgt, und wobei die Oberflächennormale der Lichteintrittsfläche (31a) und die Oberflächennormale der Lichtaustrittsfläche (33a) des bildleitenden Elements (30, 130) in einem Winkel µ zueinander stehen, welcher zwischen 5° und 175°, bevorzugt zwischen 20° und 160° und besonders bevorzugt zwischen 30° und 150° beträgt, wobei das optische Gerät (10) ein Gehäuse (20) mit einem Montageflansch (21) umfasst, wobei das Gehäuse (20) das umkehrende Reflexionsprisma (50) beherbergt, und wobei der Montageflansch (21) zur Verbindung mit einer Außenseite der schützenden Hülle (11) geeignet ist.

2. Optisches Gerät (10, 110) nach Anspruch 1, **dadurch gekennzeichnet, dass** der Winkel µ zwischen 85° und 95°, bevorzugt 90°, beträgt, und/oder dass der Winkel µ variabel einstellbar oder variierbar einstellbar ist, bevorzugt im Betrieb des optischen Gerätes, besonders bevorzugt während einer Rotationsbewegung des bildleitenden Elements, wobei das bildleitende Element (30) zumindest abschnittsweise starr oder flexibel ausgebildet ist und der Winkel µ vorzugsweise mit einer rein mechanischen Kippvorrichtung verändert werden kann.

3. Optisches Gerät (10, 110) nach einem der vorstehenden Ansprüche, **dadurch gekennzeichnet, dass** das bildleitende Element (30, 130) gebogen und/oder abgewinkelt ausgebildet ist, und/oder dass das bildleitende Element (30, 130) und/oder das Anzeigeelement (40) zumindest abschnittsweise starr oder flexibel ausgebildet ist.

4. Optisches Gerät (10, 110) nach einem der vorstehenden Ansprüche, **dadurch gekennzeichnet, dass** das bildleitende Element (30, 130) und/oder das Anzeigeelement (40) einen hochauflösenden faseroptischen Bildleiter umfasst, wobei der Durchmesser einer Lichtleitfaser des hochauflösenden faseroptischen Bildleiters 12 µm oder weniger beträgt, bevorzugt 10 µm oder weniger, besonders bevorzugt 7 µm oder weniger, beispielsweise 4 µm.

5. Optisches Gerät (10, 110) nach dem vorstehenden Anspruch, **dadurch gekennzeichnet, dass** der hochauflösende faseroptische Bildleiter eine Vielzahl von wenigstens 10.000 derartigen Lichtleitfasern umfasst, bevorzugt wenigstens 100.000, und besonders bevorzugt wenigstens 200.000 Lichtleitfasern.

6. Optisches Gerät (10, 110) nach vorstehendem Anspruch, **dadurch gekennzeichnet, dass** der faseroptische Bildleiter ausschließlich oder ergänzend IR-Fasern umfasst zur Übertragung elektromagnetischer Strahlen im nahen Infrarotbereich zwischen 780 nm bis 940 nm oder bis 3.000 nm und/oder im infraroten Bereich oberhalb von 3.000 nm.

7. Optisches Gerät (10, 110) nach einem der vorstehenden Ansprüche, **dadurch gekennzeichnet, dass** das bildleitende Element (30, 130) zumindest ein optisch wirksames Markierungselement umfasst, welche es einem Bediener ermöglicht, den konkreten Drehwinkel des abbildenden optischen Elements oder das Inkrement einer Drehung zu erkennen oder abzulesen, vorzugsweise zumindest eine markierte oder markierbare Lichtleitfaser.

8. Optisches Gerät (10, 110) nach einem der vorstehenden Ansprüche, **dadurch gekennzeichnet, dass** das bildleitende Element (30, 130) und/oder das Anzeigeelement (40) im sichtbaren Wellenlängenbereich elektromagnetischer Strahlen zwischen 380 nm bis 780 nm eine maximale Dämpfung von höchstens 5 db/m, bevorzugt höchstens 3 db/m, meist bevorzugt höchstens 1db/m und/oder im nahen Infrarotbereich zwischen 780 nm bis 940 nm eine maximale Dämpfung von 5 db/m, bevorzugt höchstens 3 db/m, meist bevorzugt höchstens 1db/m und/oder im ultravioletten Wellenlängenbereich unterhalb von 380 nm eine maximale Dämpfung von 5 db/m, bevorzugt höchstens 3 db/m, meist bevorzugt höchstens 1db/m aufweist.

9. Optisches Gerät (10, 110) nach einem der vorstehenden Ansprüche, **dadurch gekennzeichnet, dass** im Betrieb bei einer Rotation des bildleitenden Elements (30, 130) mit einer Winkelgeschwindigkeit ω um die Drehachse A eine Rotation des umkehrenden Reflexionsprismas um dieselbe Drehachse mit einer Drehgeschwindigkeit 2 * ω erfolgt.

10. Optisches Gerät (10, 110) nach einem der vorstehenden Ansprüche, **dadurch gekennzeichnet, dass** die optische Auflösung des Bildes wenigstens 25 LP/mm, bevorzugt wenigstens 30 LP/mm und besonders bevorzugt wenigstens 40 LP/mm beträgt.

11. Optisches Gerät (10, 110) nach einem der vorstehenden Ansprüche, **dadurch gekennzeichnet, dass** das bildleitende Element (30, 130) und/oder das Anzeigeelement (40) zumindest einen Abschnitt geringeren Querschnitts umfassen, in welchem die Querschnittsfläche weniger als 500 mm², bevorzugt weniger als 400 mm², besonders bevorzugt weniger als 300 mm², ganz besonders bevorzugt weniger als 200 mm² oder sogar weniger als 150 mm² oder weniger als 100 mm² beträgt.

12. Optisches Gerät (10, 110) nach einem der vorstehenden Ansprüche, **dadurch gekennzeichnet, dass** das Anzeigeelement ein Okular (41) und/oder eine Einrichtung zur Visualisierung eines optischen Bildes oder eines Wärmebildes und/oder aktive optoelektronische Komponenten zur Fernübertragung, vorzugsweise eine Kamera zur Videoübertragung, eines Bildes umfasst.

13. Optisches Gerät (10, 110) nach einem der vorstehenden Ansprüche, **dadurch gekennzeichnet, dass** im Strahlengang des optischen Gerätes (10, 110) zumindest ein weiteres optisches Element (28, 29) angeordnet ist, umfassend ein fokussierendes Element und/oder ein optisches Filterelement.

14. Optisches Gerät (10, 110) nach einem der vorstehenden Ansprüche, **dadurch gekennzeichnet, dass** im Betrieb die Rotationsbewegung des bildleitenden Elements (30, 130) auf mechanischem Weg mittels einer Drehmechanik erfolgt, wobei diese Drehmechanik vorzugsweise eine Getriebeanordnung, beispielsweise ein Stirnrad- oder ein Kegelradgetriebe, umfasst, und/oder wobei zur Rotation ein Zugmitteltrieb vorgesehen ist.

15. Verwendung eines optischen Gerätes (10, 110) nach einem der vorstehenden Ansprüche zur anschlaglosen, vorzugsweise rein optischen und/oder stromlosen, Rundumbeobachtung eines Außenbereiches aus einem mit einer schützenden Hülle (11) geschützten Raum heraus, wobei das bildleitende Element (30, 130), bevorzugt nur das distale Ende (31) des bildleitenden Elements (30, 130), außerhalb des geschützten Raumes auf der exponierten Seite (12) der schützenden Hülle (11) und das Anzeigeelement (40) auf der geschützten Seite (13) angeordnet sind.

16. Verwendung eines optischen Gerätes (10, 110) nach einem der vorstehenden Ansprüche 1-14 zur anschlaglosen, vorzugsweise rein optischen und/oder stromlosen, Rundumbeobachtung des Innenbereiches eines geschützten Raumes von außen, wobei zumindest das Anzeigeelement (40) außerhalb des geschützten Raumes angeordnet ist und nur das bildleitende Element (30, 130), bevorzugt nur das distale Ende (31) des bildleitenden Elements (30, 130), in den Innenbereich des geschützten Raumes geführt wird.

17. Verfahren zur, vorzugsweise rein optischen und/oder stromlosen, Rundumbeobachtung eines Außenbereiches aus einem mit einer schützenden Hülle (11) geschützten Raum heraus, umfassend ein optisches Gerät (10, 110) nach einem der Ansprüche 1-14, wobei
zumindest ein bildleitendes Element (30, 130) mit einem distalen und einem proximalen Ende (31, 33), ein umkehrendes Reflexionsprisma (50) mit einer Eintritts- und einer Austrittsfläche (51, 52), und ein Anzeigeelement (40), vorgesehen sind,
wobei das distale Ende (31) des bildleitenden Elements (30, 130) eine Lichteintrittsfläche (31a) zum Erfassen von Lichtstrahlen aus der Umgebung und
das proximale Ende (33) des bildleitenden Elements (30, 130) eine Lichtaustrittsfläche (33a) zum Auskoppeln von Lichtstrahlen auf die Eintrittsfläche (51) des umkehrenden Reflexionsprismas (50) umfasst, wobei
die Lichtstrahlen im Betrieb das umkehrende Reflexionsprisma (50) durchdringen und über die Austrittsfläche (52) auf das Anzeigeelement (40) gerichtet werden, wobei
das bildleitende Element (30, 130) anschlaglos um mehr als 360° um eine Drehachse A parallel zur optischen Achse des umkehrenden Reflexionsprismas (50) relativ zu dem umkehrenden Reflexionsprisma (50) und/oder zu dem Anzeigeelement (40) rotierbar gelagert ist, und wobei
die Oberflächennormale der Lichteintrittsfläche (31a) und die Oberflächennormale der Lichtaustrittsfläche (33a) des bildleitenden Elements (30, 130) in einem Winkel µ zueinander stehen, welcher zwischen 5° und 175°, bevorzugt zwischen 20° und 160° und besonders bevorzugt zwischen 30° und 150° beträgt, wobei das optische Gerät (10) ein Gehäuse (20) mit einem Montageflansch (21) umfasst, wobei das Gehäuse (20) das umkehrende Reflexionsprisma (50) beherbergt, und wobei der Montageflansch (21) zur Verbindung mit einer Außenseite der schützenden Hülle (11) geeignet ist.

## Claims

1. An optical apparatus (10, 110) for high-resolution image transfer through a protective casing (11), in particular for observation of an outside area, or as an inspection device for observation of an interior; comprising:
at least one image-guiding element (30, 130) having a distal end and a proximal end (31, 33);
an inverting reflection prism (50) having an entry face and an exit face (51, 52); and
a display element (40);
wherein the distal end (31) of the image-guiding element (30, 130) has a light entry face (31a) for capturing light beams from the environment; and
the proximal end (33) of the image-guiding element (30, 130) has a light exit face (33a) for emitting light beams onto the entry face (51) of the inverting reflection prism (50);
wherein during operation of the optical apparatus, the light beams, after having passed through the inverting reflection prism (50) and thereby accordingly having been mirror-reflected with respect to the axis, are directed through the exit face (52) thereof and onto the display element (40);
wherein the image-guiding element (30, 130) is mounted for non-stop rotation relative to the inverting reflection prism (50) and/or relative to the display element (40) over more than 360° about an axis of rotation A that is parallel to the optical axis of the inverting reflection prism (50), wherein the proximal end of the image-guiding element is mounted for rotation, and wherein rotation is accomplished non-electrically, in a purely mechanical manner; and wherein the surface normal of the light entry face (31a) and the surface normal of the light exit face (33a) of the image-guiding element (30, 130) enclose an angle µ between 5° and 175°, preferably between 20° and 160°, and most preferably between 30° and 150° between each other;
wherein the optical apparatus (10) comprises a housing (20) having a mounting flange (21), wherein the housing (20) accommodates the inverting reflection prism (50), and wherein the mounting flange (21) is adapted for being coupled to an outer surface of the protective casing (11).

2. The optical apparatus (10, 110) according to claim 1, **characterised in that** the angle µ is between 85° and 95°, preferably 90°; and/or that the angle µ is variably adjustable or selectively adjustable, preferably during operation of the optical apparatus, most preferably during a rotational movement of the image-guiding element, wherein the image-guiding element (30) is rigid or flexible at least in sections thereof; and wherein the angle µ can preferably be varied using a purely mechanical pivoting device.

3. The optical apparatus (10, 110) according to any one of the preceding claims, **characterised in that** the image-guiding element (30, 130) is curved and/or angled; and/or that the image-guiding element (30, 130) and/or the display element (40) is rigid or flexible, at least in sections thereof.

4. The optical apparatus (10, 110) according to any one of the preceding claims, **characterised in that** the image-guiding element (30, 130) and/or the display element (40) comprises a high-resolution fibre-optic image guide; wherein the diameter of an optical fibre of the high-resolution fibre-optic image guide is 12 µm or less, preferably 10 µm or less, most preferably 7 µm or less, for example 4 µm.

5. The optical apparatus (10, 110) according to the preceding claim, **characterised in that** the high-resolution fibre-optic image guide comprises a multitude of at least 10,000 of such optical fibres, preferably at least 100,000, and most preferably at least 200,000 optical fibres.

6. The optical apparatus (10, 110) according to the preceding claim, **characterised in that** the fibre-optic image guide exclusively or additionally comprises IR fibres for transmitting electromagnetic radiation in the near infrared range between 780 nm and 940 nm or up to 3,000 nm and/or in the infrared range above 3,000 nm.

7. The optical apparatus (10, 110) according to any one of the preceding claims, **characterised in that** the image-guiding element (30, 130) comprises at least one optically effective marking element which enables an operator to identify or read off the specific angle of rotation of the imaging optical element or the increment of a rotation, preferably at least one marked or markable optical fibre.

8. The optical apparatus (10, 110) according to any one of the preceding claims, **characterised in that** the image-guiding element (30, 130) and/or the display element (40) exhibits maximum attenuation in the visible wavelength range of electromagnetic radiation between 380 nm and 780 nm of no more than 5 db/m, preferably no more than 3 db/m, most preferably no more than 1db/m; and/or exhibits maximum attenuation in the near infrared range between 780 nm and 940 nm of 5 db/m, preferably no more than 3 db/m, most preferably no more than 1db/m; and/or exhibits maximum attenuation in the ultraviolet wavelength range below 380 nm of 5 db/m, preferably no more than 3 db/m, most preferably no more than 1db/m.

9. The optical apparatus (10, 110) according to any one of the preceding claims, **characterised in that** during operation, as the image-guiding element (30, 130) rotates at an angular velocity ω about the axis of rotation A, the inverting reflection prism rotates about the same axis of rotation at a rotational speed of 2 * ω.

10. The optical apparatus (10, 110) according to any one of the preceding claims, **characterised in that** optical resolution of the image is at least 25 Ip/mm, preferably at least 30 Ip/mm, and most preferably at least 40 Ip/mm.

11. The optical apparatus (10, 110) according to any one of the preceding claims, **characterised in that** the image-guiding element (30, 130) and/or the display element (40) comprises at least one portion having a smaller cross section, where the cross-sectional area is less than 500 mm², preferably less than 400 mm², more preferably less than 300 mm², most preferably less than 200 mm² or even less than 150 mm² or less than 100 mm².

12. The optical apparatus (10, 110) according to any one of the preceding claims, **characterised in that** the display element comprises an eyepiece (41) and/or a device for visualization of an optical image or of a thermal image and/or active opto-electronic components for remote transfer, preferably a camera for video transfer, of an image.

13. The optical apparatus (10, 110) according to any one of the preceding claims, **characterised in that** at least one further optical element (28, 29) is arranged in the beam path of the optical apparatus (10, 110), comprising a focusing element and/or an optical filter element.

14. The optical apparatus (10, 110) according to any one of the preceding claims, **characterised in that**, during operation, the rotational movement of the image-guiding element (30, 130) is achieved mechanically using a rotating mechanism, said rotating mechanism preferably including a gear assembly, for example a spur gear assembly or a bevel gear assembly, and/or wherein a traction drive is provided for rotation.

15. Use of an optical apparatus (10, 110) according to any one of the preceding claims for preferably purely optical and/or non-electric non-stop all-round observation of an outside area from within a space protected by a protective casing (11), wherein the image-guiding element (30, 130), preferably only the distal end (31) of the image-guiding element (30, 130) is arranged outside said protected space on the exposed side (12) of the protective casing (11), and wherein the display element (40) is arranged on the protected side (13) thereof.

16. Use of an optical apparatus (10, 110) according to any one of the preceding claims 1 - 14 for preferably purely optical and/or non-electric non-stop all-round observation of an interior of a protected space from outside, wherein at least the display element (40) is arranged outside the protected space and only the image-guiding element (30, 130), preferably only the distal end (31) of the image-guiding element (30, 130) is routed into the interior of the protected space.

17. A method for all-round observation in a preferably purely optical and/or non-electric manner of an outside area from within a space protected by a protective casing (11), comprising an optical apparatus (10, 110) according to any one of claims 1 - 14, wherein
at least one image-guiding element (30, 130) having a distal end and a proximal end (31, 33), an inverting reflection prism (50) having an entry face and an exit face (51, 52), and a display element (40) are provided;
wherein the distal end (31) of the image-guiding element (30, 130) has a light entry face (31a) for capturing light beams from the environment; and
the proximal end (33) of the image-guiding element (30, 130) has a light exit face (33a) for emitting light beams onto the entry face (51) of the inverting reflection prism (50); wherein
during operation, the light beams pass through the inverting reflection prism (50) and are directed through the exit face (52) thereof and onto the display element (40); wherein
the image-guiding element (30, 130) is mounted for non-stop rotation relative to the inverting reflection prism (50) and/or relative to the display element (40) over more than 360° about an axis of rotation A that is parallel to the optical axis of the inverting reflection prism (50), and wherein
the surface normal of the light entry face (31a) and the surface normal of the light exit face (33a) of the image-guiding element (30, 130) enclose an angle µ between each other, which is between 5° and 175°, preferably between 20° and 160°, and most preferably between 30° and 150°;
wherein the optical apparatus (10) comprises a housing (20) having a mounting flange (21), wherein the housing (20) accommodates the inverting reflection prism (50), and wherein the mounting flange (21) is adapted for being coupled to an outer surface of the protective casing (11).

## Revendications

1. Appareil optique (10, 110) destiné à la transmission d'images haute résolution, à travers une enveloppe de protection (11), en particulier pour l'observation de l'extérieur ou en tant que dispositif d'inspection pour l'observation de l'intérieur, comprenant :
au moins un élément guidant les images (30, 130) comprenant une extrémité distale et une extrémité proximale (31, 33), un prisme de réflexion d'inversion (50) doté d'une surface d'entrée et d'une surface de sortie (51, 52), et un élément d'affichage (40),
dans lequel l'extrémité distale (31) de l'élément guidant les images (30, 130) comprend une surface d'entrée de lumière (31a) destinée à recueillir des rayons lumineux provenant de l'environnement, et
l'extrémité proximale (33) de l'élément guidant les images (30, 130) comprend une surface de sortie de lumière (33a) destinée à découpler des rayons lumineux sur la surface d'entrée (51) du prisme de réflexion d'inversion (50),
sachant que
lors du fonctionnement de l'appareil optique, après le passage des rayons lumineux à travers le prisme de réflexion d'inversion (50) et une réflexion correspondante autour de l'axe, les rayons lumineux sont dirigés sur l'élément d'affichage (40), en passant par la surface de sortie (52), sachant que
l'élément guidant les images (30, 130) est monté avec possibilité de rotation, sans butée, autour d'un axe de rotation A parallèle à l'axe optique du prisme de réflexion d'inversion (50), sur plus de 360° par rapport au prisme de réflexion d'inversion (50) et/ou à l'élément d'affichage (40), sachant que l'extrémité proximale de l'élément guidant les images est fixée avec possibilité de rotation, et sachant que la rotation s'effectue de façon purement mécanique, sans courant, et sachant que la normale à la surface de la surface d'entrée de lumière (31a) et la normale à la surface de la surface de sortie de lumière (33a) de l'élément guidant les images (30, 130) forment entre elles un angle µ qui est compris entre 5° et 175°, de préférence entre 20° et 160°, et de manière particulièrement avantageuse entre 30° et 150°, sachant que l'appareil optique (10) comprend un boîtier (20) doté d'une bride de montage (21), le boîtier (20) contenant le prisme de réflexion d'inversion (50), et la bride de montage (21) étant adaptée pour l'assemblage avec une face externe de l'enveloppe de protection (11).

2. Appareil optique (10, 110) selon la revendication 1, **caractérisé en ce que** l'angle µ est compris entre 85° et 95°, de préférence 90°, et/ou **en ce que** l'angle µ peut être réglé de manière variable ou avec possibilité de modification, de préférence lors du fonctionnement de l'appareil optique, de manière particulièrement avantageuse pendant un mouvement de rotation de l'élément guidant les images, l'élément guidant les images (30) étant réalisé de façon rigide ou souple, au moins par portions, et l'angle µ pouvant de préférence être modifié avec un dispositif de basculement purement mécanique.

3. Appareil optique (10, 110) selon l'une des revendications précédentes, **caractérisé en ce que** l'élément guidant les images (30, 130) est réalisé sous une forme incurvée et/ou coudée, et/ou **en ce que** l'élément guidant les images (30, 130) et/ou l'élément d'affichage (40) est réalisé de manière rigide ou souple, au moins par portions.

4. Appareil optique (10, 110) selon l'une des revendications précédentes, **caractérisé en ce que** l'élément guidant les images (30, 130) et/ou l'élément d'affichage (40) comprend un guide d'images haute résolution à fibres optiques, le diamètre d'une fibre optique du guide d'images haute résolution à fibres optiques étant de 12 µm ou moins, de préférence de 10 µm ou moins, et de manière particulièrement avantageuse de 7 µm ou moins, par exemple de 4 µm.

5. Appareil optique (10, 110) selon la revendication précédente, **caractérisé en ce que** le guide d'images haute résolution à fibres optiques comprend une multitude d'au moins 10 000 fibres optiques de ce type, de préférence au moins 100 000, et de manière particulièrement avantageuse au moins 200 000 fibres optiques.

6. Appareil optique (10, 110) selon la revendication précédente, **caractérisé en ce que** le guide d'images haute résolution à fibres optiques comprend exclusivement ou en complément des fibres IR pour la transmission de rayons électromagnétiques dans le proche infrarouge allant de 780 nm à 940 nm ou jusqu'à 3 000 nm et/ou dans le proche infrarouge supérieur à 3 000 nm.

7. Appareil optique (10, 110) selon l'une des revendications précédentes, **caractérisé en ce que** l'élément guidant les images (30, 130) comprend au moins un élément de marquage à action optique, qui permet à un utilisateur de voir ou lire l'angle de rotation concret de l'élément optique de reproduction ou l'incrément d'une rotation, de préférence au moins une fibre optique marquée ou susceptible d'être marquée.

8. Appareil optique (10, 110) selon l'une des revendications précédentes, **caractérisé en ce que** l'élément guidant les images (30, 130) et/ou l'élément d'affichage (40), dans la gamme des longueurs d'onde visibles des rayons électromagnétiques allant de 380 nm à 780 nm, présente une atténuation maximale d'au maximum 5 db/m, de préférence d'au maximum 3 db/m, et de manière tout à fait préférée d'au maximum 1 db/m, et/ou dans le proche infrarouge compris entre 780 nm et 940 nm, présente une atténuation maximale de 5 db/m, de préférence d'au maximum 3 db/m, et de manière tout à fait préférée d'au maximum 1 db/m, et/ou dans la gamme de longueurs d'onde ultraviolettes inférieure à 380 nm, présente une atténuation maximale de 5 db/m, de préférence d'au maximum 3 db/m, et de manière tout à fait préférée d'au maximum 1 db/m.

9. Appareil optique (10, 110) selon l'une des revendications précédentes, **caractérisé en ce que** pendant le fonctionnement, lors d'une rotation de l'élément guidant les images (30, 130) à une vitesse angulaire ω autour de l'axe de rotation A, une rotation du prisme de réflexion d'inversion autour du même axe de rotation a lieu à une vitesse de rotation de 2 * ω.

10. Appareil optique (10, 110) selon l'une des revendications précédentes, **caractérisé en ce que** la résolution optique de l'image est au moins de 25 LP/mm, de préférence au moins de 30 LP/mm et de manière particulièrement avantageuse au moins de 40 LP/mm.

11. Appareil optique (10, 110) selon l'une des revendications précédentes, **caractérisé en ce que** l'élément guidant les images (30, 130) et/ou l'élément d'affichage (40) comprennent au moins partie de section transversale réduite, dans laquelle l'aire de section transversale est inférieure à 500 mm², de préférence inférieure à 400 mm², et de manière particulièrement avantageuse inférieure à 200 mm², voire inférieure à 150 mm² ou inférieure à 100 mm².

12. Appareil optique (10, 110) selon l'une des revendications précédentes, **caractérisé en ce que** l'élément d'affichage comprend un oculaire (41) et/ou un dispositif de visualisation d'une image optique ou d'une image thermique et/ou des composants opto-électroniques actifs destinés à la télétransmission, de préférence une caméra de transmission vidéo, d'une image.

13. Appareil optique (10, 110) selon l'une des revendications précédentes, **caractérisé en ce qu'**est disposé dans le trajet des rayons de l'appareil optique (10, 110), au moins un autre élément optique (28, 29) qui comprend un élément de focalisation et/ou un élément de filtrage optique.

14. Appareil optique (10, 110) selon l'une des revendications précédentes, **caractérisé en ce que** lors du fonctionnement, le mouvement de rotation de l'élément guidant les images (30, 130) s'effectue par voie mécanique au moyen d'une mécanique de rotation, ladite mécanique de rotation comprenant de préférence un système de transmission, par exemple un engrenage droit ou un engrenage conique, et/ou un mécanisme d'entraînement par traction étant prévu pour la rotation.

15. Utilisation d'un appareil optique (10, 110) selon l'une des revendications précédentes, pour l'observation panoramique sans butée, de préférence purement optique et/ou sans courant, d'une zone extérieure, depuis un espace protégé par une enveloppe de protection (11), l'élément guidant les images (30, 130), de préférence uniquement l'extrémité distale (31) de l'élément guidant les images (30, 130), étant disposé(e) à l'extérieur de l'espace protégé, sur le côté exposé (12) de l'enveloppe de protection (11), et l'élément d'affichage (40) étant disposé sur le côté protégé (13).

16. Utilisation d'un appareil optique (10, 110) selon l'une des revendications précédentes 1 à 14, pour l'observation panoramique sans butée, de préférence purement optique et/ou sans courant, de la zone intérieure d'un espace protégé, depuis l'extérieur, au moins l'élément d'affichage (40) étant disposé à l'extérieur de l'espace protégé, et seul l'élément guidant les images (30, 130), de préférence uniquement l'extrémité distale (31) de l'élément guidant les images (30, 130), étant introduit dans la zone intérieure de l'espace protégé.

17. Procédé d'observation panoramique, de préférence purement optique et/ou sans courant, d'une zone extérieure, depuis un espace protégé par une enveloppe de protection (11), comprenant un appareil optique (10, 110) selon l'une des revendications 1 à 14, selon lequel
il est prévu au moins un élément guidant les images (30, 130) comprenant une extrémité distale et une extrémité proximale (31, 33), un prisme de réflexion d'inversion (50) doté d'une surface d'entrée et d'une surface de sortie (51, 52), et un élément d'affichage (40),
dans lequel l'extrémité distale (31) de l'élément guidant les images (30, 130) comprend une surface d'entrée de lumière (31a) destinée à recueillir des rayons lumineux provenant de l'environnement, et
l'extrémité proximale (33) de l'élément guidant les images (30, 130) comprend une surface de sortie de lumière (33a) destinée à découpler des rayons lumineux sur la surface d'entrée (51) du prisme de réflexion d'inversion (50),
sachant que
lors du fonctionnement, les rayons lumineux traversent le prisme de réflexion d'inversion (50) et sont dirigés sur l'élément d'affichage (40), en passant par la surface de sortie (52), sachant que
l'élément guidant les images (30, 130) est monté avec possibilité de rotation, sans butée, autour d'un axe de rotation A parallèle à l'axe optique du prisme de réflexion d'inversion (50), sur plus de 360° par rapport au prisme de réflexion d'inversion (50) et/ou à l'élément d'affichage (40), et sachant que
la normale à la surface de la surface d'entrée de lumière (31a) et la normale à la surface de la surface de sortie de lumière (33a) de l'élément guidant les images (30, 130) forment entre elles un angle µ qui est compris entre 5° et 175°, de préférence entre 20° et 160°, et de manière particulièrement avantageuse entre 30° et 150°, sachant que l'appareil optique (10) comprend un boîtier (20) doté d'une bride de montage (21), le boîtier (20) contenant le prisme de réflexion d'inversion (50), et sachant que la bride de montage (21) convient pour l'assemblage avec une face externe de l'enveloppe de protection (11).
